(19) **Europäisches Patentamt European Patent Office Office européen des brevets**

(11) **EP 4 572 189 A1**

(12) **EUROPEAN PATENT APPLICATION**
published in accordance with Art. 153(4) EPC

(43) Date of publication:
**18.06.2025 Bulletin 2025/25**

(21) Application number: **23853103.2**

(22) Date of filing: **14.08.2023**

(51) International Patent Classification (IPC):
**H04L 1/00** (2006.01)   **H04L 5/00** (2006.01)
**H04W 72/20** (2023.01)   **H04W 72/04** (2023.01)
**H04W 4/40** (2018.01)   **H04W 72/12** (2023.01)

(52) Cooperative Patent Classification (CPC):
**H04L 1/00; H04L 5/00; H04W 4/40; H04W 72/04;
H04W 72/12; H04W 72/20**

(86) International application number:
**PCT/KR2023/012024**

(87) International publication number:
**WO 2024/035238 (15.02.2024 Gazette 2024/07)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **12.08.2022  KR 20220101410**

(71) Applicant: **Innovative Technology Lab Co., Ltd.
Seocho-gu, Seoul 06744 (KR)**

(72) Inventor: **PARK, Dong Hyun
Seoul 06744 (KR)**

(74) Representative: **Diehl & Partner
Patent- und Rechtsanwaltskanzlei mbB
Erika-Mann-Straße 9
80636 München (DE)**

(54) **METHOD AND APPARATUS FOR PERFORMING SIDELINK COMMUNICATION IN
UNLICENSED BAND**

(57)    A method of performing sidelink communication in an unlicensed band may include determining entire resource elements (REs) for a physical sidelink shared channel (PSSCH); and determining a transport block size (TBS) based on the entire REs.

**FIG. 21**

EP 4 572 189 A1

**Description**

TECHNICAL FIELD

The present disclosure proposes a rate matching method for new radio (NR) sidelink-unlicensed (SL-U) data channel transmission and reception in an unlicensed band.

RELATED ART

The International Mobile Telecommunication (IMT) framework and standard have been developed by the International Telecommunication Union (ITU). Also, a continuous discussion about 5-th generation (5G) communication is ongoing through a program called "IMT for 2020 and beyond."

To satisfy the requirements requested by "IMT for 2020 and beyond," various proposals have been made to support various numerologies about a time-frequency resource unit standard by considering various scenarios, service requirements, and potential system compatibility in a 3-rd Generation Partnership Project (3GPP) new radio (NR) system.

Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Also, Vehicle-to-everything (V2X) communication, a communication method of exchanging or sharing road infrastructures during driving and information, such as traffic conditions, through communication with other vehicles, may be considered. V2X may include, for example, vehicle-to-vehicle (V2V), which may refer to a long term evolution (LTE)-based/New Radio (NR) based communication between vehicles, vehicle-to-pedestrian (V2P), which may refer to LTE-based/NR-based communication between a vehicle and a user equipment (UE) carried by a user, and a vehicle-to-infrastructure/network (V2I/N), which may refer to a LTE-based/NR-based communication between a vehicle and a roadside unit (RSU)/network. The RSU may be a transportation infrastructure entity configured by a base station or a fixed UE, such as, an entity that transmits a speed notification to a vehicle.

DETAILED DESCRIPTION

TECHNICAL SUBJECT

The present disclosure relates to a rate matching method and device for new radio (NR) sidelink-unlicensed (SL-U) data channel transmission and reception in an unlicensed band. The present disclosure relates to a method and device for determining a transport block size (TBS) for a physical sidelink shared channel (PSSCH) within an NR SL-U system in an unlicensed band.

TECHNICAL SOLUTION

A method of performing sidelink communication in an unlicensed band may include determining entire resource elements (REs) for a physical sidelink shared channel (PSSCH); and determining a transport block size (TBS) based on the entire REs.

EFFECT

The present disclosure may provide a rate matching method for new radio (NR) sidelink-unlicensed (SL-U) data channel transmission and reception in an unlicensed band.

The present disclosure may provide a method for determining a transport block size (TBS) for a physical sidelink shared channel (PSSCH) within an NR SL-U system in an unlicensed band.

BRIEF DESCRIPTION OF DRAWINGS

FIG. 1 illustrates an example of describing a new radio (NR) frame structure to which the present disclosure may apply.
FIG. 2 illustrates an NR resource structure to which the present disclosure may apply.
FIG. 3 illustrates an NR sidelink slot structure to which the present disclosure may apply.

FIG. 4 illustrates an NR sidelink frequency to which the present disclosure may apply.

FIG. 5 illustrates an NR sidelink resource pool configuration to which the present disclosure may apply.

FIG. 6 illustrates an unlicensed band for each region for NR sidelink communication to which the present disclosure may apply.

FIG. 7 illustrates use of a 5 gigahertz (GHz) unlicensed band to which the present disclosure may apply.

FIG. 8 illustrates a method of increasing a bandwidth in consideration of a power spectral density (PSD) limitation to which the present disclosure may apply.

FIG. 9 illustrates a method of configuring a guard band in consideration of a shared band within an intra-cell to which the present disclosure may apply.

FIG. 10 illustrates an interlace-based resource block (RB) resource assignment method to which the present disclosure may apply.

FIG. 11 illustrates a method of performing a listen before talk (LBT) procedure in an unlicensed band to which the present disclosure may apply.

FIG. 12 illustrates a channel occupancy time (COT) sharing and discovery burst transmission to which the present disclosure may apply.

FIG. 13 illustrates a method of applying cyclic prefix (CP) extension to uplink when performing COT sharing between downlink and uplink to which the present disclosure may apply.

FIG. 14 illustrates a semi-static channel access procedure to which the present disclosure may apply.

FIG. 15 illustrates a method of performing channel occupancy to which the present disclosure may apply.

FIG. 16 illustrates a method of configuring a bandwidth part (BWP) in a sidelink unlicensed band and a resource block set (RBS) in a resource pool to which the present disclosure may apply.

FIG. 17 illustrates a resource pool configuration method of a sidelink unlicensed band to which the present disclosure may apply.

FIG. 18 illustrates frequency resource-based sidelink unlicensed band resource pool configuration using interlace assignment to which the present disclosure may apply.

FIG. 19 illustrates a sidelink unlicensed band resource pool configuration method to which the present disclosure may apply.

FIG. 20 may be a CPE and PSSCH RM operation for a sidelink unlicensed band applicable to the present disclosure.

FIG. 21 illustrates PSSCH assignment and automatic gain control (AGC)/Gap presence status in various sidelink unlicensed (SL-U) scheduling and channel occupancy cases applicable to the present disclosure.

FIG. 22 illustrates a PSSCH applicable to the present disclosure.

FIG. 23 illustrates PSSCH DMRS overhead control considering multi-time transmission interval (TTI) scheduling in SL-U applicable to the present disclosure.

FIG. 24 illustrates PSCCH duplication assigned to an RBS and transmitted applicable to the present disclosure.

FIG. 25 illustrates an SL-SSB applicable to the present disclosure.

FIG. 26 illustrates a device to which the present disclosure may apply.

BEST MODE

Various examples of the present disclosure will be described more fully hereinafter with reference to the accompanying drawings such that one of ordinary skill in the art to which the present disclosure pertains may easily implement the examples. However, the present disclosure may be implemented in various forms and is not limited to the examples described herein.

In describing the examples of the present disclosure, a detailed description on known configurations or functions may be omitted for clarity and conciseness. Throughout the drawings and the detailed description, unless otherwise described, the same drawing reference numerals are understood to refer to the same elements, features, and structures.

It will be understood that when an element is referred to as being "connected to," "coupled to," or "accessed to" another element, it can be directly connected, coupled, or accessed to the other element or the intervening elements may be present. Also, it will be further understood that when an element is described to "comprise/include" or "have" another element, it specifies the presence of another element, but does not preclude the presence of another element uncles otherwise described.

Further, the terms, such as first, second, and the like, may be used herein to describe the elements in the description herein. These terms are used to distinguish one element from another element. Thus, the terms do not limit the element, an arrangement order, a sequence or the like. Therefore, a first element in an example may be referred to as a second element in another example. Likewise, a second element in an example may be referred to as a first element in another example.

Herein, distinguishing elements are merely provided to clearly explain the respective features and do not represent the elements as necessarily separate from each other. That is, a plurality of elements may be integrated into a single hardware or software unit. Also, a single element may be distributed to a plurality of hardware or software units. Therefore, unless particularly described, the integrated or distributed example is also included in the scope of the present disclosure.

Herein, the elements described in various examples may not be necessarily essential and may be partially selectable. Therefore, an example including a partial set of elements described in an example is also included in the scope of the present disclosure. Also, an example that additionally includes another element to the elements described in various examples is also included in the scope of the present disclosure.

The description described herein is related to a wireless communication network, and an operation performed in a wireless communication network may be performed in the process of controlling a network and transmitting data by a system that controls a wireless network, e.g., a base station, or may be performed in a user equipment

It is apparent that various operations performed for communication with a UE in a network including a base station and a plurality of network nodes may be performed by the base station or by other network nodes in addition to the base station. Here, the term 'base station (BS)' may be interchangeably used with other terms, for example, a fixed station, a Node B, an eNodeB (eNB), a gNodeB (gNB), and an access point (AP). Also, the term 'terminal' may be interchangeably used with other terms, for example, user equipment (UE), a mobile station (MS), a mobile subscriber station (MSS), a subscriber station (SS), and a non-AP station (non-AP STA).

Herein, transmitting or receiving a channel includes the meaning of transmitting or receiving information or a signal through the corresponding channel. For example, transmitting a control channel indicates transmitting control information or a signal through the control channel. Likewise, transmitting a data channel indicates transmitting data information or a signal through the data channel.

In the following description, although the term "new radio (NR) system" is used to distinguish a system according to various examples of the present disclosure from the existing system, the scope of the present disclosure is not limited thereto.

A new radio (NR) system supports various subcarrier spacings (SCSs) by considering various scenarios, service requirements, potential system compatibility, and the like. Also, to overcome a poor channel environment, such as high pathloss, phase-noise, and frequency offset, that occurs on a high carrier frequency, the NR system may support transmission of a physical signal/channel through a plurality of beams. Through this, the NR system may support applications, such as, enhanced Mobile Broadband (eMBB), massive Machine Type Communications (mMTC)/ultra Machine Type Communications (uMTC), and Ultra Reliable and Low Latency Communications (URLLC).

Here, the 5G mobile communication technology may be defined by including the existing Long Term Evolution-Advanced (LTE-A) system as well as the aforementioned NR system. That is, the 5G mobile communication technology may operate by considering the backward compatibility with a previous system as well as a newly defined NR system. Therefore, following the 5G mobile communication may include technology operating based on the NR system and a technology operating based on a previous system (e.g., LTE-A, LTE), but is not limited to a specific system.

First of all, the physical resource structure of the NR system to which the present disclosure is applied will be briefly described.

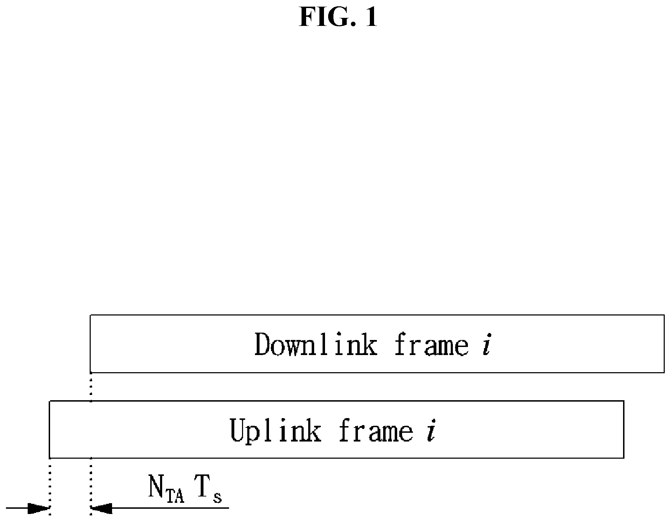

FIG. 1 illustrates an example of an NR frame structure according to an example of the present disclosure.

In the NR, a basic unit of a time domain may be $T_c = 1/(\Delta f_{max} \cdot N_f)$. Here, $\Delta f_{max} = 480 \cdot 10^3$ and $N_f = 4096$. Also, $\kappa = T_s/T_c = 64$ may be a constant in a multiple relationship between an NR time unit and an LTE time unit. In LTE, $T_s = 1/(\Delta f_{ref} \cdot N_{f,ref})$, $\Delta f_{ref} = 15 \cdot 10^3$ and $N_{f,ref} = 2048$ may be defined as a reference time unit. The constants for the multiple relationship between the NR time base unit and the LTE time base unit may be defined as $k = T_s/T_c = 64$.

Referring to FIG. 1, a time structure of a frame for a downlink/uplink (DL/UL) transmission may include $T_f = (\Delta f_{max} N_f/100) \cdot T_s = 10ms$. Here, a single frame may include 10 subframes corresponding to $T_{sf} = (\Delta f_{max} N_f/1000) \cdot T_s = 1ms$. A number of consecutive orthogonal frequency division multiplexing (OFDM) symbols per subframe may be

$$N_{symb}^{subframe,\mu} = N_{symb}^{slot} N_{slot}^{subframe,\mu}$$

. Also, each frame may be divided into two half frames and the half frames may include 0 to 4 subframes and 5 to 9 subframes. Here, the half frame 1 may include 0 to 4 subframes and the half frame 2 may include 5 to 9 subframes.

The $N_{TA}$ represents the timing advance (TA) between downlink (DL) and uplink (UL). Here, a transmission timing of the uplink transmission frame i is determined based on a downlink reception timing at a UE according to the following Equation 1.

[Equation 1]

$$T_{TA} = \left( N_{TA} + N_{TA,offset} \right) T_c$$

The $N_{TA,offset}$ denotes a TA offset value occurring due to a duplex mode difference and the like. Basically, in a frequency division duplex (FDD), $N_{TA,offset}$=0. In a time division duplex (TDD), $N_{TA,offset}$ may be defined as a fixed value by considering a margin for a DL-UL switching time. For example, in the TDD (Time Division Duplex) of RF1 (Frequency Range 1) which is a sub-6 GHz or less frequency, $N_{TA,offset}$ may be 39936$T_C$ or 2600$T_C$. 39936$T_C$=20.327$\mu$s and 25600$T_C$=13.030$\mu$s. Also, in FR2 (Frequency Range 2) which is millimeter wave (mmWave), the $N_{TA,offset}$ may be 13792$T_C$. At this time, 39936$T_C$=7.020 $\mu$s.

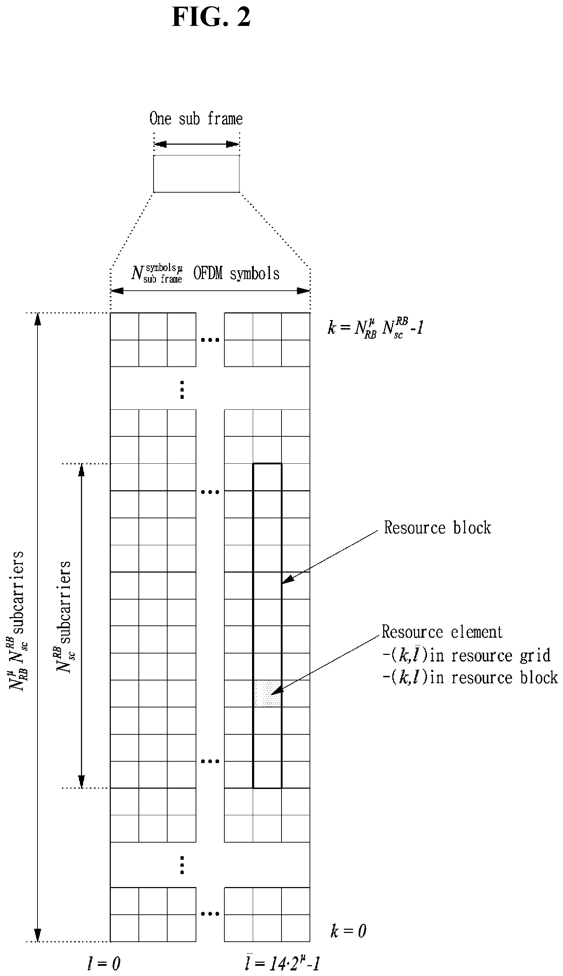

FIG.2 illustrates an NR resource structure to which the present disclosure may apply.

A resource element within a resource grid may be indexed based on each subcarrier spacing. Here, a single resource grid may be generated for each antenna port and for each subcarrier spacing. The uplink/downlink transmission and reception may be performed based on a corresponding resource grid.

A resource block (RB) on a frequency domain is configured of 12 REs and for every 12 Res, an index for one RB ($n_{PRB}$) may be configured. The index for RB may be utilized within a specific frequency band or system bandwidth. The index for RB may be defined as shown in Equation 2 below. Here, the $N^{RB}_{sc}$ represents the number of subcarriers per one RB and k represents the subcarrier index.

[Equation 2]

$$n_{PRB} = \left\lfloor \frac{k}{N^{RB}_{sc}} \right\rfloor$$

Numerologies may be variously configured to meet the various services and requirements of the NR system. For example, one subcarrier spacing (SCS) may be supported in the LTE/LTE-A system, but a plurality of SCS may also be supported in the NR system.

A new numerology for the NR system that supports the plurality of SCSs may operate in a frequency range or carrier, such as 3 GHz or less, 3 GHz-6 GHz, 6 GHZ-52.6 GHz, or 52.6 GHz or more, to solve the issue that a wide bandwidth is unavailable in a frequency range or carrier such as 700 MHz or 2 GHz

Table 1 below shows an example of the numerologies supported by the NR system.

[Table 1]

| $\mu$ | $\Delta f = 2^{\mu} \cdot 15[kHz]$ | Cyclic prefix |
|---|---|---|
| 0 | 15 | Normal |
| 1 | 30 | Normal |
| 2 | 60 | Normal, Extended |
| 3 | 120 | Normal |
| 4 | 240 | Normal |

Referring to the above Table 1, the numerologies may be defined based on an SCS, a cyclic prefix (CP) length, and a number of OFDM symbols per slot, which are used in an OFDM system. The aforementioned values may be provided to a UE through the higher layer parameters, DL-BWP-mu and DL-BWP-cp, for the downlink, and through the higher layer parameter, UL-BWP-mu and UL-BWP-cp, for the uplink.

In the above Table 1, if $\mu$ = 2 and SCS = 60 kHz, a normal CP and an extended CP may be applied. In other bands, only the normal CP may be applied.

Here, a normal slot may be defined as a basic time unit used to transmit a single piece of data and control information in the NR system. A length of the normal slot may basically include 14 OFDM symbols. Also, dissimilar to a slot, a subframe may have an absolute time length corresponding to 1 ms in the NR system and may be used as a reference time for the length of another time section. Here, for the coexistence and backward compatibility of the LTE and the NR system, a time section, such as an LTE subframe, may be required for an NR standard.

For example, in the LTE, data may be transmitted based on a transmission time interval (TTI) that is a unit time. The TTI may include at least one subframe unit. Here, even in the LTE, a single subframe may be set to 1 ms and may include 14 OFDM symbols (or 12 OFDM symbols).

Also, in the NR system, a non-slot may be defined. The non-slot may refer to a slot having the number of symbols less by at least one symbol than that of the normal slot. For example, in the case of providing a low latency such as an Ultra-Reliable and Low Latency Communications (URLLC) service, the latency may decrease through the non-slot having the number of slots less than that of the normal slot. Here, the number of the OFDM symbols included in the non-slot may be determined based on a frequency range. For example, a non-slot with 1 OFDM symbol length may be considered in the frequency range of 6 GHz or more. As another example, the number of symbols used to define the non-slot may include at least two OFDM symbols. Here, the range of the number of OFDM symbols included in the non-slot may be configured with a length of a mini slot up to (normal slot length) -1. Here, although the number of OFDM symbols may be limited to 2, 4, or 7, as a non-slot standard, it is provided as an example only.

Also, for example, an SCS corresponding to $\mu = 1$ and 2 may be used in the unlicensed band of 6 GHz or less and an SCS corresponding to $\mu = 3$ and 4 may be used in the unlicensed band above 6 GHz. Here, for example, if $\mu = 4$, it may be used for a synchronization signal block (SSB).

[Table 2]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

Table 2 shows a number of OFDM symbols per slot ( $N_{symb}^{slot}$ ), a number of slots per frame ( $N_{slot}^{frame,\mu}$ ), and a number of slots per subframe ( $N_{slot}^{subframe,\mu}$ ) for the normal CP by the subcarrier spacing setting. In Table 2, the values are based on the normal slot having 14 OFDM symbols.

[Table 3]

| $\mu$ | $N_{symb}^{slot}$ | $N_{slot}^{frame,\mu}$ | $N_{slot}^{subframe,\mu}$ |
|---|---|---|---|
| 2 | 12 | 40 | 4 |

In Table 3, in the case of the extended CP applied (that is, $\mu = 2$ and SCS = 60 kHz), shows the number of slots per frame and the number of slots per subframe based on the normal slot for which the number of OFDM symbols per slot is 12.

As described above, a single subframe may correspond to 1 ms on a time axis. Also, a single slot may correspond to 14 symbols on the time axis. For example, a single slot may correspond to 7 symbols on the time axis. Therefore, the number of slots and the number of symbols that may be considered may be differently set within 10 ms corresponding to a single radio frame. Table 4 may show the number of slots and the number of symbols according to each SCS. Although the SCS of 480 kHz may not be considered in Table 4, the present disclosure is not limited to such examples.

[Table 4]

| SCS | slots in 10ms | slots in 10ms | symbols in 10 ms |
|---|---|---|---|
| 15 kHz | 10 | 20 | 140 |
| 30 kHz | 20 | 40 | 280 |
| 60 kHz | 40 | 80 | 560 |
| 120 kHz | 80 | N/A | 1120 |
| 240 kHz | 160 | N/A | 2240 |
| 480 kHz | 320 | N/A | 4480 |

The V2X service may support a set of basic requirements for V2X services. The requirements are designed basically in sufficient consideration of a road safety service. Here, V2X UE may exchange autonomous status information through a SL. Also, the V2X UE may exchange the information with infrastructure nodes and/or pedestrians.

The V2X service (e.g., LTE Rel-15) may support at least one of a carrier aggregation in a SL, a high order modulation, a latency reduction, a transmit (Tx) diversity, and a sTTI (Transmission Time Interval). For this purpose, new features may be applied to the V2X communication. More particularly, the V2X UE may operate in consideration of coexistence with other V2X UEs. For example, the V2X UE may use the same resource pool as other V2X UEs.

For example, the technical features may be classified largely based on four categories as represented by the following Table 5 by considering the use cases for supporting a V2X service as the system aspect (SA) 1, but are not limited thereto. In Table 5, the "Vehicles Platooning" may be the technology that enables a plurality of vehicles to dynamically form a group and similarly operate. The "Extended Sensors" may be the technology that enables an exchange of data gathered from sensors or video images. The "Advanced Driving" may be the technology that enables a vehicle to drive based on semi-automation or full-automation. The "Remote Driving" may be the technology for remotely controlling a vehicle and the technology for providing an application. Based thereon, further description related thereto may be given by the following Table 5.

[Table 5]

| Vehicles Platooning |
| --- |
| Vehicles Platooning enables the vehicles to dynamically form a platoon travelling together. All the vehicles in the platoon obtain information from the leading vehicle to manage this platoon. These information allow the vehicles to drive closer than normal in a coordinated manner, going to the same direction and travelling together. |
| **Extended Sensor** |
| Extended Sensor enables the exchange of raw or processed data gathered through local sensors or live video images among vehicles, road site units, devices of pedestrian and V2X application servers. The vehicles can increase the perception of their environment beyond of what their own sensors can detect and have a more broad and holistic view of the local situation. High data rate is one of the key characteristics. |
| **Advanced Driving** |
| Advanced Driving enables semi-automated or full-automated driving. Each vehicle and/or RSU shares its own perception data obtained from its local sensors with vehicles in proximity and that allows vehicles to synchronize and coordinate their trajectories or manoeuvres. Each vehicle shares its driving intention with vehicles in proximity too. |
| **Remote Driving** |
| Remote Driving enables a remote driver or a V2X application to operate a remote vehicle for those passengers who cannot drive by themselves or remote vehicles located in dangerous environments. For a case where variation is limited and routes are predictable, such as public transportation, driving based on cloud computing can be used. High reliability and low latency are the main requirements. |

Also, the SA1 may support the case of operating in various systems (e.g., LTE and NR) as enhanced V2X (eV2X) support technology for supporting the V2X service. For example, an NR V2X system may be a first V2X system. Also, an LTE V2X system may be a second V2X system. That is, the NR V2X system and the LTE V2X system may be different V2X systems.

The following describes a method for satisfying low latency and high reliability required in an NR SL based on the NR V2X system. However, the same or similar composition may be expanded and applied to the LTE V2X system, and is included but not limited to the following examples. That is, in the LTE V2X system, the present disclosure may apply to an interactable portion.

Here, NR V2X capability may not be limited to essentially supporting only V2X services and V2X RAT to be used may be selected.

Also, new service requirements for Public Safety and commercial use case for NR V2X services may be considered further in. For example, the use case may include, but is not limited to, at least one of more advanced V2X services, public safety services, the Network Controlled Interactive Service (NCIS), the Gap Analysis for Railways (MONASTERYEND), the Enhanced Relays for Energy Efficiency and Extensive Coverage (REFEC), and the Audio-Visual Service Production (AVPROD) certification.

A physical channel, a signal, a basic slot structure, and a physical resource may be configured for the NR V2X. Here, an NR Physical SL Shared Channel (NR PSSCH) may be a physical layer NR SL data channel. The V2X UEs may exchange data and control information (e.g., 2nd SCI, CSI) through the NR PSSCH. An NR Physical SL Control Channel (NR PSCCH) may be a physical layer NR SL control channel. The NR PSCCH refers to a channel for transmitting scheduling information of the NR SL data channel and control information (1st SL Control Information (SCI)) including 2nd SCI indication. That is, a V2X UE may transmit control information for SL data communication to another V2X UE through PSCCH. An NR Physical SL Feedback Channel (NR PSFCH) refers to a channel for transmitting physical layer NR Hybrid Automatic Repeat Request (HARQ) feedback information and a channel for transmitting HARQ-ACK feedback information corresponding to the NR SL data channel (i.e., PSSCH). The V2X UE may transmit data to another V2X UE and then may receive the HARQ feedback information of the corresponding data through NR PSFCH. An NR SL Synchronization Signal/Physical SL Broadcast Channel (SLSS/PSBCH) block refers to a channel block in which an NR SL synchronization signal and a broadcast channel are transmitted in a single consecutive time. Here, the SLSS/PSBCH block may be periodically transmitted based on a set of one or more block indexes to support beam-based transmission in an NR frequency band. The synchronization signal includes a Primary SL Synchronization Signal (PSSS) and a Secondary SL Synchronization Signal (SSSS). The synchronization signal is generated based on at least one SLSSID value. The NR Physical SL Broadcast Channel (PSBCH) refers to a channel for transmitting system information required to perform V2X SL communication. The NR PSBCH is transmitted with the SLSS and periodically transmitted based on a set of SLSS/PSBCH block indexes to support beam-based transmission.

Also, a PSCCH and PSSCH may be defined for supporting NR V2X. A UE may transmit SCI to another UE via PSCCH. Here, the Tx UE may transmit the first SCI (1st SCI, SCI format 1-A) to the Rx UE via PSCCH. The 1st SCI may be used for scheduling the PSSCH and the secondary SCI (2nd SCI) within the PSSCH, and the 1st SCI may contain priority information, time/frequency resource allocation information, resource reservation information, Demodulation Reference Signal (DMRS) pattern information, 2nd SCI format indicator information, 2nd beta-offset indicator information as a parameter for the SCI and PSSCH rate matching operation, DMRS port count information, Modulation Coding Scheme (MCS) information, additional MCS table indicator information (e.g., indicating one of the 64 QAM, or 256 OAM or URLLC MCS table), PSFCH overhead indicator information (a parameter for PSSCH rate matching operation with 2nd SCI), and at least one of the reserved bits.

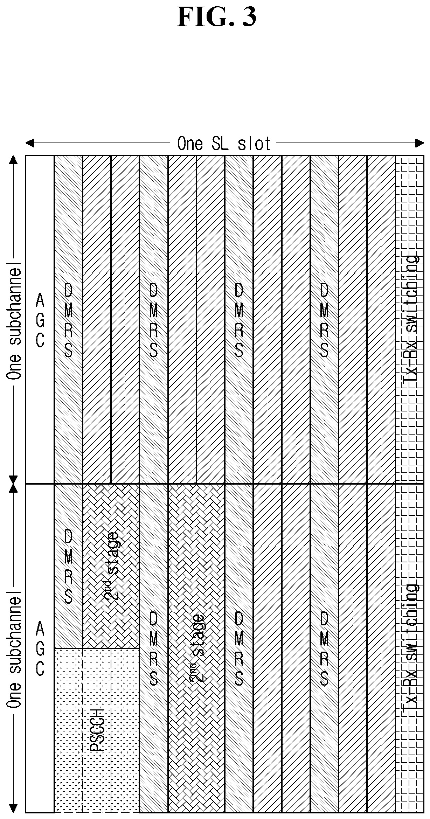

FIG. 3 illustrates an NR SL slot structure to which the present disclosure may apply.

Referring to FIG. 3, a single SL slot (SL slot) includes a single automatic gain control (AGC) symbol. Also, a single SL slot includes a single Tx-Rx switching symbol. In a single SL slot, the PSSCH that is a channel through which data is transmitted is transmitted through at least one subchannel (e.g., two subchannels in FIG. 3). Also, in a time domain, PSCCH (1st SCI), 2nd SCI, PSSCH (Data), and demodulation RS (DMRS) for demodulation may be transmitted to the remaining OFDM symbols excluding the AGC symbol and the Tx-Rx switching symbol. In detail, locations of the PSCCH (1st SCI), the 2nd SCI, PSSCH (Data), and the DMRS for demodulation may be the same as in FIG. 3, but are not limited thereto. For example, in FIG. 3, the PSCCH and the 2nd SCI are present in the first subchannel and the PSSCH and the DMRS may be allocated considering this. As another example, the second subchannel refers to a subchannel in which the PSCCH and the 2nd SCI are absent and the PSSCH and the DMRS may be allocated as in FIG. 3.

Here, the number of PSSCH DMRSs may be configured according to a higher layer configuration and one or more PSSCH DMRSs may be configured according to a channel environment of the UE. A PSCCH (1st SCI) receives a demodulation using a DMRS of PSCCH (i.e., PSCCH DMRS) and is equally allocated and transmitted to every four resource elements (REs) within a single resource block (RB). On the contrary, the 2nd SCI is decoded using the PSSCH DMRS.

Also, for example, a single resource pool associated with an NR SL may support the frequency division multiplexing (FDM), the time division multiplexing (TDM), and the spatial divisional multiplexing (SDM). This means that each resource in a single resource pool can be divided and used based on the frequency, the time, and the space, which can increase the resource efficiency.

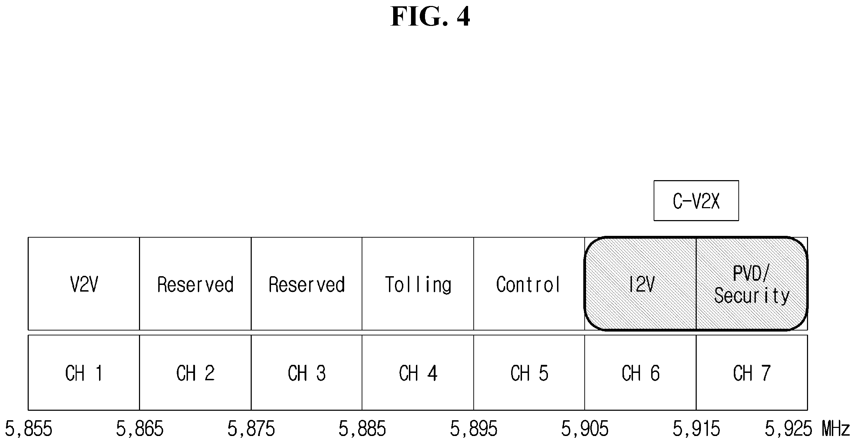

FIG. 4 illustrates an NR SL frequency to which the present disclosure may apply. For example, the NR SL may operate based on at least one of Frequency Range 1 (FR1) (sub 6 GHz) and Frequency Range 2 (FR2) (i.e., up to 52.6 GHz), the unlicensed ITS bands, and the licensed band. In detail, for example, referring to FIG. 4, 5,855 to 5,925 MHz may be allocated for an ITS service (technology neutral manner).

Also, the NR V2X quality of service (QoS) requirements may be considered. That is, the delay, the reliability, and a data rate may need to be satisfied with predetermined conditions related to the requirements for an NR V2X service. Here, the requirements may be configured as in Table 6 below and Table 7 may show the PC5 QoS for NR V2X.

Here, to satisfy the QoS requirements, the access stratum (AS) level QoS management may be required. To this end, a HARQ and CSI feedback associated with a link adaptation may be required. Also, each of the NR V2X UEs may have a different maximum bandwidth capability (max. BW capability). Considering this, AS level information that includes at least one of UE capability, QoS related information, a radio bearer configuration, and a physical layer configuration may be exchanged between the NR V2X UEs.

[Table 6]

| |
|---|
| - Delay:[3, 100ms] |
| - Reliability :[90%, 99.999%] |
| - Data rate: up to 1Gbps (TS22.186) |

[Table 7]

| PQI Value | Resource Type | Default Priority Level | Packet Delay Budget | Packet Error Rate | Default Maximum Data Burst Volume | Default Averaging Window | Example Services |
|---|---|---|---|---|---|---|---|
| 1 | GBR (NOTE 1) | 3 | 20 ms | $10^{-4}$ | N/A | 2000 ms | Platooning between UEs-Higher degree of automation; Platooning between UE and RSU-Higher degree of automation |
| 2 | | 4 | 50 ms | $10^{-2}$ | N/A | 2000 ms | Sensor sharing-higher degree of automation |
| 3 | | 3 | 100 ms | $10^{-4}$ | N/A | 2000 ms | Information sharing for automated driving-between UEs or UE and RSU-higher degree of automation |
| 55 | Non-GBR | 3 | 10 ms | $10^{-4}$ | N/A | N/A | Cooperative lane change-higher degree of automation |
| 56 | | 6 | 20 ms | $10^{-1}$ | N/A | N/A | Platooning informative exchange-low degree of automation; Platooning-information sharing with RSU |
| 57 | | 5 | 25 ms | $10^{-1}$ | N/A | N/A | Cooperative lane change-lower degree of automation |
| 58 | | 4 | 100 ms | $10^{-2}$ | N/A | N/A | Sensor information sharing-lower degree to an RSU |
| 59 | | 6 | 500 ms | $10^{-1}$ | N/A | N/A | Platooning-reporting to an RSU |
| 82 | Delay Critical GBR (NOTE 1) | 3 | 10 ms | $10^{-4}$ | 2000 bytes | 2000 ms | Cooperative collision avoidance; Sensor sharing-Higher degree of automation; Video sharing-higher degree of automation |
| 83 | | 2 | 3 ms | $10^{-5}$ | 2000 bytes | 2000 ms | Emergency trajectory alignment; Sensor sharing-Higher degree of automation |

| |
|---|
| •NOTE 1: GBR and Delay Critical GBR PQIs can only be used for unicast PC5 communications. Editor's note: It is FFS if GBR and Delay Critical GBR can also be used for broadcast and groupcast. |
| • NOTE 1: For standardized PQI to QoS characteristics mapping, the table will be extended/updated to support service requirements for other identified V2X services.<br>• NOTE 2: The PQIs may be used for other services than V2X. |

Hereinafter, a SL HARQ procedure is described. Whether the V2X UE is to report a HARQ feedback is indicated by a higher layer (e.g., RRC) configuration and SCI signaling (e.g., 2nd SCI). For example, if the V2X UE performs SL communication based on a groupcast, whether to report the HARQ feedback may be determined based on a distance between a Tx UE and a Rx UE.

When the V2X UE performs at least one of unicast and groupcast transmission, the SL HARQ feedback may be enabled or disabled. Here, enabling/disabling the HARQ feedback may be determined based on at least one of a channel condition (e.g., RSRP), a distance between Tx UE and Rx UE, and QoS requirements.

In the case of groupcast, whether to transmit a HARQ feedback may be determined based on a physical distance between the Tx UE and the Rx UE. Here, when the HARQ feedback is performed for the groupcast transmission via a PSSCH, the Rx UE may send a negative response only when the received PSSCH decoding fails. It may be called an option 1 operation. Moreover, when the HARQ feedback is performed for the groupcast transmission via a PSSCH, the Rx UE may send a positive response or a negative response based on whether a PSSCH decoding succeeds and it may be called an option 2 operation. In the option 1 operation of feeding back only a negative response as a NACK only HARQ feedback, if the physical distance between the Tx UE and the Rx UE is less than or equal to the communication range requirements, a HARQ feedback corresponding to the PSSCH reception may be performed. On the contrary, if the physical distance between the Tx UE and the Rx UE is greater than the communication range requirements, the V2X UE may not perform the HARQ feedback corresponding to the PSSCH reception.

Here, a location of the Tx UE is indicated to the Rx UE through SCI signaling associated with the PSSCH. The Rx UE may estimate a distance from the Tx UE based on both pieces of information included in the received SCI and its location information and may operate as above.

Also, when a unicast communication is performed based on the V2X, a case in which an SL HARQ feedback is enabled may be considered. The Rx UE may generate and transmit a HARQ ACK/NACK corresponding to the PSSCH depending on whether the decoding of a corresponding transport block (TB) succeeds.

Then, an NR SL resource allocation mode refers to a mode in which a base station schedules a SL transmission resource. Here, a mode in which the base station schedules a SL transmission resource may be mode 1. For example, when the V2X UE is located within the base station coverage, the V2X UE may receive SL resource information from the base station. On the contrary, there is a mode in which the V2X UE directly determines a resource for SL transmission on either a SL resource configured by the base station/network or a pre-configured SL resource. Here, a mode in which the UE directly determines a SL transmission resource may be mode 2.

Also, numerology and waveform for sidelink may be considered, which may be as shown in Table 8 below. In detail, regarding PSSCH/PSCCH and PSFCH in a sidelink, SCS and CP lengths supported in each of FR1 and FR2 may be as shown in Table 8 below. Here, the waveform may support only OFDM without supporting DFT-S-OFDM, but may not be limited thereto. A sidelink-synchronization signal block (SL-S SB) may be defined independently for each frequency range, which may be similar to NR-Uu.

[Table 8]

| | FR 1 | FR 2 |
|---|---|---|
| PSSCH/PSCCH and PSFCH | - Normal CP for 15 kHz, 30 kHz, 60 kHz<br>- Extended CP for 60 kHz | - Normal CP for 60 kHz, 120 kHz,<br>- Extended CP for 60 kHz |
| note | No support of DFT-S-OFDM for NR SL in Rel-16 | |

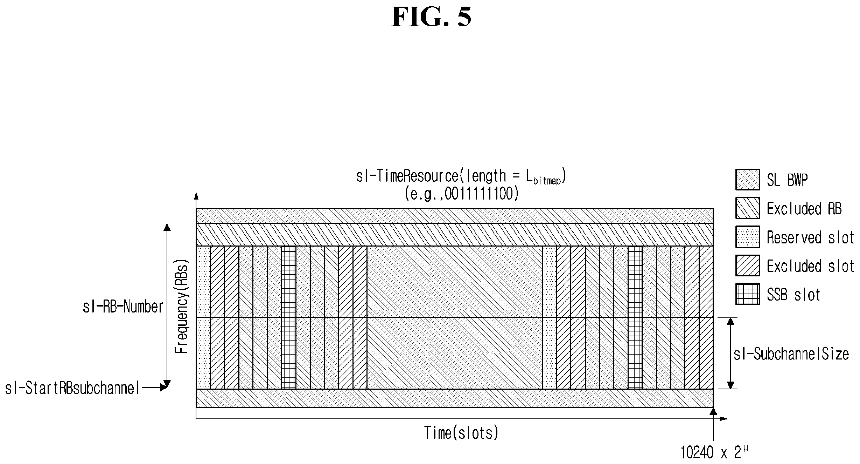

FIG. 5 illustrates an NR sidelink (SL) resource pool configuration. Referring to FIG. 5, a resource pool may represent resources in a time and a frequency used for sidelink transmission and reception. For example, at least one resource pool may be configured within a single SL BWP within a single carrier. Here, resources of the resource pool may be configured based on time resources of a slot set unit and frequency resources of a consecutive subchannel set unit. Also, the resource pool may be configured for each of transmission and reception.

In more detail, as time resources for resource pool configuration provided in an NR sidelink, at least one of a resource pool time period, a sidelink slot set (sl-TimeResource (length = $L_{bitmap}$)) within a single resource pool application period, and a first symbol and the number of consecutive symbols for a set of consecutive symbols within a single slot may be configured. As frequency resources, at least one of a bandwidth of at least one subchannel (e.g., sl-SubchannelSize = {10, 15, 20, 25, 50, 75 and 100} RBs), the entire bandwidth of the resource pool indicated by the number of consecutive subchannels (set of consecutive subchannels (e.g., sl-NumSubchannel = {1 to 27})), and a location in the frequency domain of a first subchannel of the resource pool (sl-StartRBsubchannel={0 to 265}) may be configured. For example, resources in the time domain and the frequency domain may be configured based on higher layer parameters. In FIG. 5, a frequency resource corresponding to an excluded resource block (RB) may represent some remaining RBs if total available RB resources do not exactly match a subchannel size (i.e., if it does not reach the number of RBs constituting a single subchannel). Here, the corresponding resources may not be used in the NR sidelink. Also, for example, a reserved slot may indicate a remaining slot in a situation in which a multiple unit of a length of a bitmap (e.g., sl-TimeResource) on a time resources is not established and may not be used as NR sidelink resources.

Next, a case in which an unlicensed band (unlicensed spectrum) is used for communication between a base station and a UE may be considered. For example, a communication scheme based on the unlicensed band may be a scheme of occupying a channel through competition and performing communication based on the occupied channel. The unlicensed band-based communication may be performed even for communication between the base station and the UE. In the following, described is an operation based on a case in which the unlicensed band is used for the sidelink communication. That is, the unlicensed band may be used even for sidelink communication that is communication between UEs. Also, the sidelink resource pool needs to be configured in consideration of using the sidelink unlicensed band. In more detail, the sidelink communication may be performed based on the resource pool. In the case of performing communication through the unlicensed band, the resource pool configuration needs to be differently configured.

For example, the resource pool of the sidelink communication may be configured based on a slot unit and a symbol that may be used for sidelink within a slot may be determined, which is the same as shown in FIG. 5. Also, as described above with FIG. 5, in the frequency domain, it may be configured based on the number of consecutive subchannels. The aforementioned sidelink resource pool configuration may be configured in consideration of unlicensed band communication, which is described below.

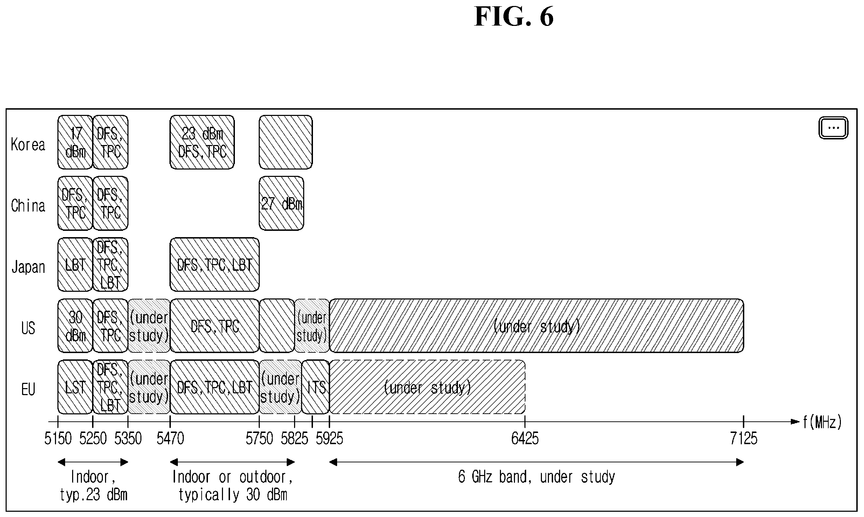

FIG. 6 illustrates an unlicensed band for each region for NR sidelink communication to which the present disclosure may apply. In Table 8 above, the frequency range of NR FR1 may be from 450 MHz to 6 GHz, but the corresponding frequency range may change from 450 MHz to 7.125 GHz. The frequency range of NR FR1 may be changed for the unlicensed band of 6 GHz band, but may not be limited thereto.

For example, the unlicensed band may be located below 1 GHz, 2.4 GHz, 5 GHz, 6 GHz, 37 GHz (USA only), and 60 GHz, but may not be limited thereto. Here, referring to FIG. 6, for example, in the system, 5 GHz band may be band 46 that is defined as 5150 to 5925 MHz. Also, for example, for LAA operation, band 49 (3550-3700 MHz) may be defined as a citizens broadband radio service (CBRS), but may not be limited thereto.

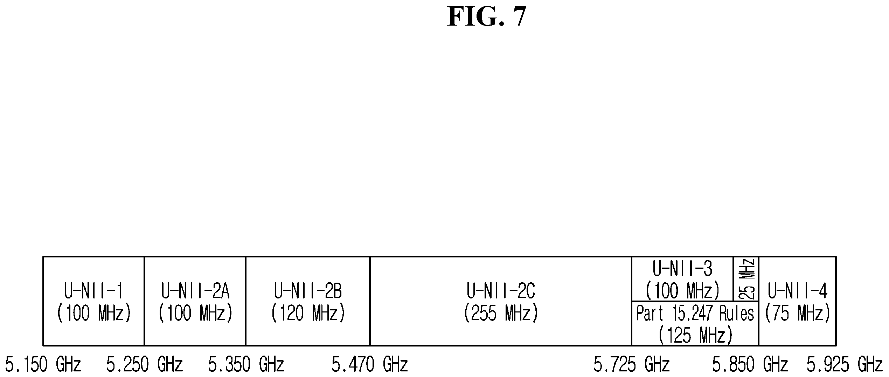

FIG. 7 illustrates use of a 5 GHz unlicensed band to which the present disclosure may apply. Referring to FIG. 7, each band within the 5 GHz unlicensed band may be set and, based thereon, use of the unlicensed band may be set. For example, it may be divided into 20 MHz units and each 20 MHz may be a single channel.

Here, the low frequency band of 5150 to 5350 MHz within the aforementioned band is specified in most regions to have the maximum transmit power of 23 dBm for indoor use. Also, in the band of 5470 MHz or more, it is used in a region with transmit power of up to 30 dBm and outdoor use in most areas. Here, for example, additional requirements may be present in some regions, given as effective isotropic radiated power (EIRP) values based on Table 9 below, along with limitation of the maximum transmit power.

[Table 9]

| Power spectral density, maximum channel occupancy time, minimum occupied bandwidth and dynamic frequency selection, transmit power control and LBT |
| --- |

Here, power spectral density (PSD) may indicate that the device is limited to performing full power transmission within a reference bandwidth. As a detailed example, European regulations may limit the PSD to 10 dBm/MHz. Therefore, in non-20MHz bandwidths, the device may not perform transmission at the maximum transmit power of 23 dBm.

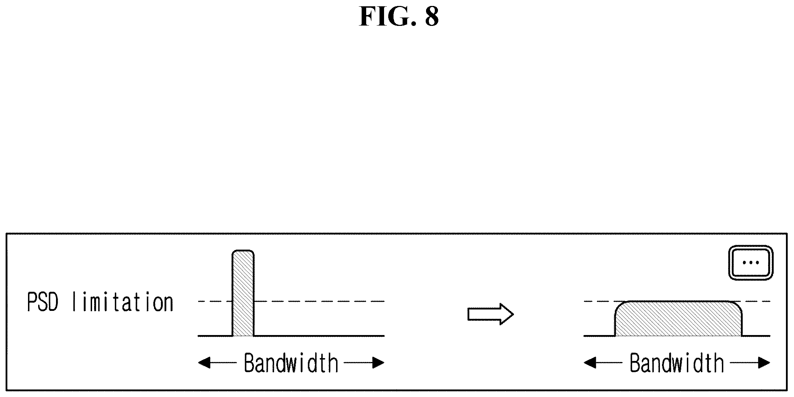

FIG. 8 illustrates a method of increasing a bandwidth in consideration of a PSD limitation to which the present disclosure may apply. For example, as in FIG. 8 a case of small data transmission that requires only a small bandwidth may be considered. Here, in the case of performing small data transmission through a wide bandwidth, coverage may be expanded. Also, minimum bandwidth occupancy regulation may be satisfied with transmission through the wide bandwidth. Considering this, a method of performing transmission in the wide bandwidth may be preferred for small data.

Also, for example, in the case of occupying a channel through a channel access procedure in the unlicensed band, a maximum channel occupancy time (COT) corresponding to an occupancy-allowable maximum time may be differently set for each region. For example, Japan allows the maximum COT of up to 4 ms, while Europe allows the maximum COT of up to 8 ms or 10 ms. However, it is only an example and is not limited to the aforementioned embodiment. Also, for example, Europe may support frame base equipment (FBE) and load base equipment (LBE) rules. Here, FBE may be set to High Performance Radio (LAN HiperLAN)/2, and LBE may be adopted and applied from Wi-Fi standard specification and both may be supported in NR as a new communication system.

Also, for example, the minimum occupied bandwidth may be a bandwidth regulation that needs to be minimally occupied when a channel access is successful once. For example, the minimum occupied bandwidth regulation may be configured to occupy a nominal channel BW of 80 to 90% or more. As a detailed example, when the UE transmits a PUSCH to the base station in an unlicensed band, resources for the PUSCH may be requested to be allocated in an interlaced form in a specific bandwidth, but may not be limited to the corresponding embodiment.

Also, a regulation for dynamic frequency selection may be a regulation that limits bandwidth use for the purpose of protecting a system (e.g., radio) having high priority for use of the unlicensed band. Also, a transmit power control regulation may be a regulation that limits transmit power much lower than an allowed maximum transmit power value to be used. Also, a listen before talk (LBT) regulation may be a regulation for a channel access procedure, and Europe may support FBE and LBE rules. Here, FBE may be Hiperlan/2, and LBE may be adopted and applied from Wi-Fi standard specification and both may be supported in NR.

Also, for example, the 5 GHz unlicensed band may be used based on the aforementioned description, but, use of the 6 GHz band is under discussion in every country and institution. Here, the 6 GHz band may be a band that is not used in a mobile system, which differs from the 5 GHz. That is, different from the 5 GHz band shared in a plurality of mobile communication systems, the 6 GHz band may be used for a single specified communication system. Therefore, problems or inefficiency arising due to coexistence of different systems may be reduced.

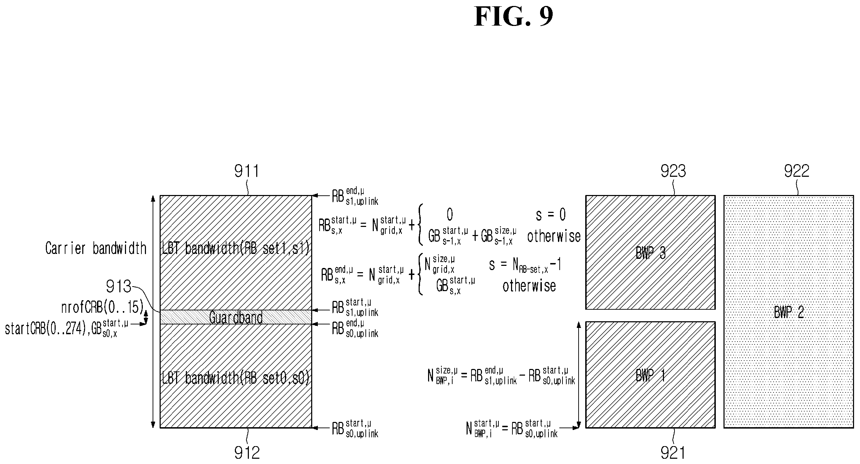

FIG. 9 illustrates a method of configuring a guard band in consideration of a shared band (e.g., unlicensed band) within an intra-cell to which the present disclosure may apply.

Referring to FIG. 9, to support a wideband operation in a shared spectrum access, a UE may receive IntraCellGuardBandsPerSCS parameter for each of an UL carrier and a DL carrier from a base station based on base station configuration. The UE may be provided with intra-cell guard bands of $N_{\text{RB-set,x}}$ - 1 in a single carrier (subcarrier spacing index=$\mu$). Referring to FIG. 9, the UE may receive higher layer signaling for a start common resource block (CRB) and the number of CRBs for each guard band. For example, the CRB may be a resource block defined/configured based on a point A that is a start location of a transmission bandwidth in a carrier in the frequency domain. The UE may verify information on the point A through base station signaling and, based thereon, may recognize a CRB location in frequency.

Here, each guard band may be defined based on $GB_{s,x}^{\text{start},\mu}$ parameter as the start CRB and, in each guard band, the size of the number of CRBs may be defined based on $GB_{s,x}^{\text{size},\mu}$ parameter. The UE may receive the aforementioned information through higher layer signaling based on each of startCRB and nrofCRBs parameters. Here, $s \in \{0,1, \dots, N_{\text{RB-set,x}} - 2\}$, $N_{\text{RB-set,x}}$ denotes the number of RB sets, and x may be configured as DL or UL for downlink and uplink. $N_{\text{RB-set,x}}$ RB sets may be configured as a resource block set (RBS) within a single carrier through a guard band configuration. For example, the guard band may be configured based on IntraCellGuardBandsPerSCS parameter and the RBS may be configured within a single carrier accordingly.

Here, each RBS frequency bandwidth may correspond to an LBT frequency bandwidth. That is, each RBS may be set as a bandwidth corresponding to an LBT procedure performed through the base station and the UE. For example, in FIG. 9, if LBT succeeds in a correspondence area corresponding to the LBT bandwidth, an RB set 1 911 and an RB set 2 922 may occupy a corresponding band and may perform communication. That is, the RBS may correspond to the LBT bandwidth. For example, a Tx node (e.g., gNB or UE) may determine channel occupancy for the unlicensed band through an LBT channel access procedure performed on RBS resources corresponding to the LTE bandwidth. When the LBT procedure succeeds in a single RBS, the Tx node may perform transmission on a resource corresponding to the RBS.

Here, each RBS may be defined as a start CRB and an end CRB. The start CRB may be $RB_{s,x}^{\text{start},\mu}$ , and the end CRB may be $RB_{s,x}^{\text{end},\mu}$ . Here, a size of guard band 913 may be nrofCRBs. For example, a size of a guard band 913, nrofCRBs, may not be expected to be set to a size smaller than the number of applicable intra-cell guard bands defined in consideration of requirements regarding an interference status of a wireless bandwidth according to subcarrier spacing $\mu$ and carrier size $N_{\text{grid,x}}^{\text{size},\mu}$ .

Here, the start CRB and the end CRB for each RBS (911, 912) may be determined based on RBS index s, and RBS index s may be $s \in \{0,1, \dots, N_{\text{RB-set,x}} - 1\}$. That is, RBS index s may be a resource block with a size of $RB_{s,x}^{\text{size},\mu}$ , and $RB_{s,x}^{\text{size},\mu}$ denotes the number of CRBs determined through the start CRB and the end CRB based on Equation 3 below. Also, in each RBS, the start CRB and the end CRB may be as shown in Equation 4 and Equation 5 below.

[Equation 3]

$$RB_{s,x}^{\text{size},\mu} = RB_{s,x}^{\text{end},\mu} - RB_{s,x}^{\text{start},\mu} + 1$$

[Equation 4]

$$RB_{s,x}^{\text{start},\mu} = N_{\text{grid,x}}^{\text{start},\mu} + \begin{cases} 0 & s = 0 \\ GB_{s-1,x}^{\text{start},\mu} + GB_{s-1,x}^{\text{size},\mu} & \text{otherwise} \end{cases}$$

[Equation 5]

$$RB_{s,x}^{\text{end},\mu} = N_{\text{grid},x}^{\text{start},\mu} + \begin{cases} N_{\text{grid},x}^{\text{size},\mu} - 1 & s = N_{\text{RB-set},x} - 1 \\ GB_{s,x}^{\text{start},\mu} - 1 & \text{otherwise} \end{cases}$$

For example, if the UE is not provided with IntraCellGuardBandsPerSCS parameter configuration, CRB indexes for a nominal intra-cell guard band and an RBS pattern based on carrier $\mu$ and carrier size $N_{\text{grid},x}^{\text{size},\mu}$ may be determined according to requirements of RF standard. Also, for example, if the aforementioned nominal intra-cell guard band and RBS pattern do not include an intra-cell guard band, an RBS of the corresponding carrier may be assumed to be 1.

For example, in FIG. 9, two LBT BWs (RBS 0, RBS1) may be configured in a single BWP 922 within a single carrier bandwidth. Here, a single guard band 913 may be configured between the two RBSs 911 and 913. A location of each of the two RBSs 911 and 913 may be determined as shown in FIG. 9, based on the aforementioned higher layer parameter. Also, for example, when a plurality of BWPs 921 and 923 are configured within a single carrier bandwidth, an RBS associated with each BWP may be verified. Here, RBSs corresponding to a first RBS (=s0, 912) and a last RBS(=s1, 911) of each BWP among the RBSs 911 and 912 within the carrier may be indexed through s0 and s1 indexes.

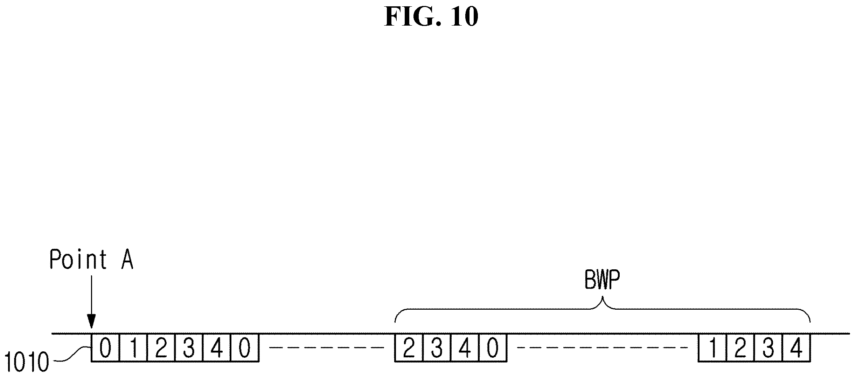

FIG. 10 illustrates an interlace-based RB resource assignment method applied to the present disclosure. PUCCH/PUSCH transmission may be performed through RB resources assigned based on interlaces. Here, a reference point for RB resource assigned based on interlace may be point A 1010. The UE may acquire information on the point A 1010 through base station signaling, which is described above. Also, a common resource block (CRB) may be a resource block defined/configured based on the point A 1010 that is a start location point of a transmission bandwidth on a carrier. That is, when physical uplink control channel (PUCCH)/physical uplink shared channel (PUSCH) transmission is performed with interlace-based RB resources, all the interlaces may be used based on the same configuration on the carrier based on the reference point A 1010 and the CRB. For example, as described above, the existing wireless communication system (e.g., LTE LAA) and wireless communication system (e.g., NR) may perform PUCCH/PUSCH transmission with the interlace-based RB resources, but may not be limited thereto.

For example, in the case of 15 kHz SCS, an interlace of M=10 may be defined for the entire bandwidth. In the case of 30 kHz SCS, an interlace of M=5 may be defined for the entire bandwidth. Also, X bits may be provided for interlace assignment through frequency resource assignment-related signaling. As a detailed example, if X = 5 for 30 kHz SCS, X bits may indicate all possible interlace combinations. As still another example, if X = 6 for 15 kHz SCS, X bits may indicate a start interlace index and the number of consecutive interlaces. For example, a value of 55 may be required based on the combination of the start interlace index and the number of consecutive interlaces. Therefore, when indicated with 6 bits, 9 remaining RIV values may be present and the 9 remaining RIV values may indicate specific pre-defined interlace combination.

Also, Y bits may be provided for RB set assignment through frequency resource assignment-related signaling. RB set assignment may be start and end RB sets based on an RIV format. Here, RB sets may be consecutive at all times. Also, for example, when two adjacent RB sets are assigned, a guard band between the RB sets may also be assigned and may be used as a frequency resource.

Also, for example, a method may be required to fairly access and use a channel between various wireless access technologies/systems (e.g., Wi-Fi, LAA, NR-U, etc.) in an unlicensed band. For example, a rule (e.g., ETSI rule) for channel access based on the aforementioned 5 GHz and 6 GHz frequency bands may be provided, and matters as shown Table 10 below may be specified, but may not be limited thereto.

[Table 10]

| |
|---|
| - nominal center frequencies |
| - nominal channel bandwidth and occupied channel bandwidth |
| - RF output power limits |
| - transmit power control (TPC) and power density requirements |
| - transmitter unwanted emissions limits |
| - receiver spurious emissions requirements |
| - dynamic frequency selection (DFS) |
| - adaptivity (channel access -mechanism) |
| - receiver blocking requirements |
| - user access restrictions |

(continued)

| - geo-location capability |
| --- |

Here, as a channel access method based on Table 10, Frame Base Equipment (FBE) and Load Base Equipment (LBE) rules may be supported. For example, the LBE access rule may consider factors of Table 11 below. The channel access may be performed by determining a channel occupancy status based on clear channel assessment (CCA) measurement. Also, transmission based on an occupied channel may be performed after determining transmit power based on channel occupancy.

[Table 11]

| |
| --- |
| Medium energy sensing: performs energy measurement in a transmission candidate channel during an observation slot (9 us) time based on clear channel assessment (CCA) measurement. |
| Energy detection (ED) threshold (TL): Threshold for determining whether a channel is occupied. If energy greater than TL is detected, the UE determines that the channel is occupied, and otherwise, determines that the channel is empty (idle). The ED threshold is specified based on the maximum transmit power as shown below, assuming 0 dBi receive antenna. |
| · For PH $\leq$ 13 dBm: TL = -75 dBm/MHz (i.e., -62 dBm / 20 MHz) |
| · For 13 dBm < PH < 23 dBm: TL = -85 dBm/MHz + (23 dBm - PH) |
| · For PH $\geq$ 23 dBm: TL = -85 dBm/MHz (i.e., -72 dBm/20 MHz) |

A channel access priority class (CAPC) may be set for channel access, which may be as shown in Table 12. Here, a priority class may specify priority based on a specific traffic type and quality of service (QoS) requirements. For example, in Table 12, four priority classes may be defined. Here, a different priority counter (p) value may be specified for each priority class. Here, the higher priority class, the lower the priority counter value may be.

Also, for example, a channel occupancy time (COT) may be a transmission burst duration. Here, the maximum COT limit may be differently determined for each different priority class. A higher priority class may have a shorter maximum COT duration. That is, a higher priority class may have a lower priority counter value and a shorter maximum COT duration.

Also, for example, a contention window (CW) may be a window for selecting a counter value for performing a backoff procedure for channel access. Here, the contention window may be different for each priority class, which may be as shown in Table 12 below.

[Table 12]

| Channel Access Priority Class ($p$) | $m_p$ | $CW_{min,p}$ | $CW_{max,p}$ | $T_{mcot,p}$ | allowed $CW_p$ sizes |
| --- | --- | --- | --- | --- | --- |
| 1 | 1 | 3 | 7 | 2 ms | {3,7} |
| 2 | 1 | 7 | 15 | 3 ms | {7,15} |
| 3 | 3 | 15 | 63 | 8 or 10 ms | {15,31,63} |
| 4 | 7 | 15 | 1023 | 8 or 10 ms | {15,31,63,127,255,511,1023} |

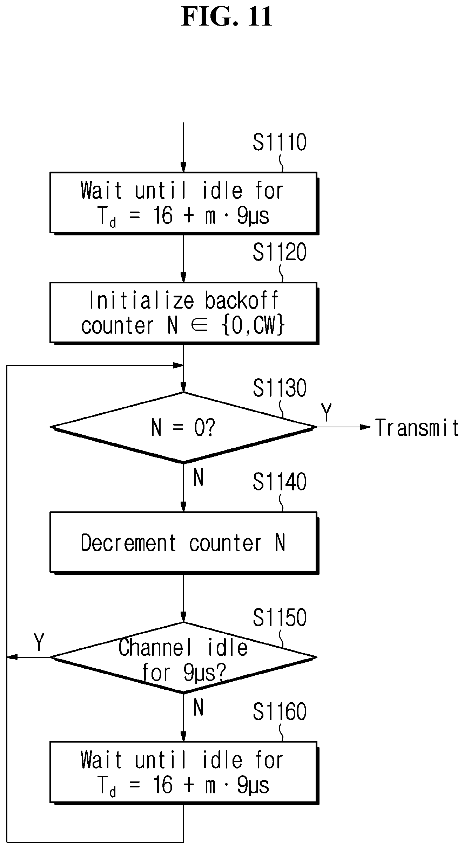

FIG. 11 illustrates a method of performing a listen before talk (LBT) procedure in an unlicensed band to which the present disclosure may apply. For example, a Type 1 LBT procedure (LBT cat 4) may be considered based on the aforementioned LBE. The LBT procedure may be set based on category 1 to category 4, which is described below. Referring to FIG. 11, a Tx node may wait to verify whether a channel is available for a defer period (S1110). Here, the defer period may be determined based on a priority class of Table 13 below. For example, the defer period may measure whether a channel is available for at least 25 us. Here, that feedback information on data transmission is transmitted within a maximum of 16 us may be considered. Considering the above, the defer period may measure whether the channel is available for at least 25 us.

When it is determined that the channel is available for the defer period, the corresponding node may perform a backoff procedure. Here, backoff counter N may be initialized to a random value between 0 and a CW value (S1120). That is, the random value between 0 and the CW value may be used as the backoff counter. Here, whether the channel is available may be counted based on 9 us slot and backoff may be performed as much as the backoff counter value. Here, a larger backoff value may be set based on a larger contention window and a collision probability may decrease accordingly.

Then, whether the backoff counter value is 0 may be determined (S1130). If the backoff counter value is 0, the corresponding node may perform transmission. The corresponding node may use the channel up to the maximum COT during which occupancy is allowed, based on a priority class for transmission. On the contrary, if the backoff counter value is not 0, the backoff counter value may decrement, that is, decrease (S1140). Then, whether the channel is idle in a next 9 us slot may be determined (S1150). Here, if the channel is in an idle state in the 9 us slot, whether the backoff counter value is 0 may be verified again. If the backoff counter value is not 0, an operation of decreasing the backoff counter value may be repeated. Through this, if the backoff counter value becomes 0, the aforementioned transmission may be performed.

On the contrary, if the channel is not idle in the 9 us slot, the corresponding node may wait again for an amount of time corresponding to the defer period and then verify whether the channel is available based on the backoff counter value (S1160). Based on the above, the corresponding node may occupy an unlicensed band and may perform transmission. Also, for example, the defer period for downlink/uplink, possible contention values, and maximum COT based on the priority class may be as shown in Table 13 below.

[Table 13]

| Priority Class | | Defer Period $T_d$ = 16 + $m$ * $9us$ | Possible CW Values {$CW_{min}$ , ... . . , $CW_{max}$} | Max $COT^{a,b}$(ms) |
|---|---|---|---|---|
| 1 | DL | 25 | {3, 7} | 2 |
| | UL | 34 | | 2 |
| 2 | DL | 25 | {7, 15} | 3 |
| | UL | 34 | | 4 |
| 3 | DL | 43 | {15, 31, 63 } | 8 or 10 |
| | UL | | {15, 31, 63, 127, 255, 511, 1023} | 8 or 10 |
| 4 | DL | 79 | {15, 31, 63, 127, 255, 511, 1023} | 8 or 10 |
| | UL | | | 8 or 10 |

Here, for example, a contention window size may be adjusted based on HARQ feedback. In detail, if HARQ feedback received for a first transmission that the corresponding node performs within the COT is NACK, the contention window size may be doubled in consideration of retransmission. On the contrary, if HARQ feedback received for each transmission is ACK, the contention window size may be reset to a CW min value. Here, adjusting the contention window size with the first transmission within the COT may result in a collision in the first transmission after the node occupies the channel. In the aforementioned case, the contention window size needs to be updated. On the other hand, receiving NACK for transmission after the first transmission within the COT may be more likely to occur based on a poor channel environment or other reasons rather than collision occurrence. Accordingly, as described above, the contention window size may be adjusted based on feedback of the first transmission within the COT.

As still another example, contention window adjustment for configured grant-based downlink (DL)/uplink (UL) transmission may be performed based on feedback information in downlink/ feedback information in uplink, respectively. Also, for example, when downlink feedback transmission is absent in uplink grant-based uplink transmission, contention window adjustment may be performed through a new data indicator (NDI), but is not limited to a specific embodiment.

Also, for example, an energy detection (ED) threshold (TL) may be determined based on a parameter, a channel bandwidth, and other values. As still another example, the ED threshold may be determined depending on whether a carrier frequency is shared with other wireless access technologies (e.g., WiFi) or whether an installation method ensures the use of only a specific wireless communication system (e.g., NR). As a detailed example, in the 5 GHz band coexisting with other systems, a maximum threshold may be set to -72 dBm for 20 MHz carrier. Here, -72dBm may be a value that is determined through comparison to other wireless communication systems (e.g., WiFi system), but may not be limited to a specific embodiment. As still another example, if only a specific wireless communication system (e.g., NR) uses a carrier frequency, the maximum threshold may be used as -62dBm for 20MHz carrier and a threshold for uplink transmission may be set through RRC signaling, but may not be limited to a specific embodiment.

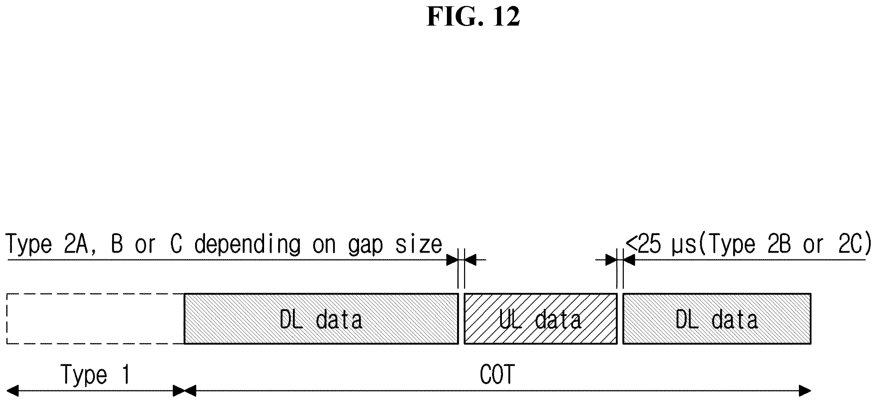

Then, FIG. 12 illustrates a COT sharing and discovery burst transmission applied to the present disclosure. Referring to FIG. 12, in the case of occupying a channel the aforementioned Type 1 LBT procedure, transmission may be performed within the COT. Here, Type 2 transmission may have three options based on a gap section within the COT, which may be as shown in Table 14 below. For example, Type 2A (LBT cat 2) transmission may set a COT gap to 25 us or more and may use the same for discovery burst transmission. For example, Type 2A may be considered for SSB transmission, but may not be limited thereto. As still another example, Type 2B transmission may be a type that applies a COT gap of 16 us. Also, Type 2C transmission may be a type that applies a COT gap of 16 us or less. For example, if next transmission is 16 us at most, idle sensing may not be required and Type 2C may be applied.

[Table 14]

| |
|---|
| - Type 2A (LBT cat 2) - applies COT gap of 25 us or more/uses the same for discovery burst transmission<br>- Type 2B - applies COT gap of 16 us<br>- Type 2C (LBT cat 1) -applies COT gap of 16 us or less |

Here, for the aforementioned COT sharing, the gap may be smaller than an OFDM symbol interval. This is because an OFDM symbol-based resource assignment method may be insufficient and a method of indicating CP extension may be applied by taking the aforementioned issues into consideration. That is, extending a CP faster than an OFDM symbol boundary may be indicated and one of Table 15 below may be indicated.

[Table 15]

| |
|---|
| - No CP extension<br>- $C_2 T_{symb}$ - $T_{TA}$ - 16 $\mu$s => use with Type 2B<br>- $C_3 T_{symb}$ - $T_{TA}$ - 25 $\mu$s, => use with Type 2A<br>- Tsymb - 25 $\mu$s - option that does not compensate for TA |

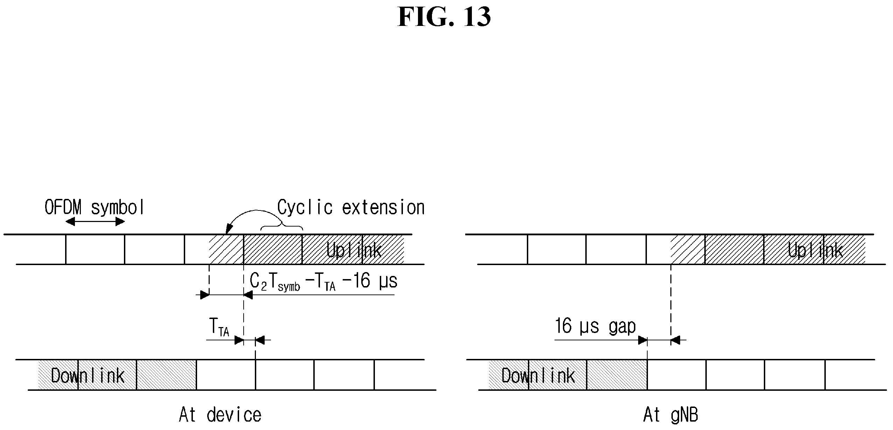

For example, FIG. 13 illustrates a method of applying CP extension to uplink when performing COT sharing between downlink and uplink, applicable to the present disclosure. FIG. 13 illustrates a case in which C2 is set to 1 with 16 us gap based on COT sharing, but is not limited thereto. Referring to FIG. 13, a TA value may be considered to ensure the 16 us gap between downlink and uplink in a base station. For example, C values may be set through RRC signaling. Also, CP extension for uplink transmission may be indicated in uplink grant.

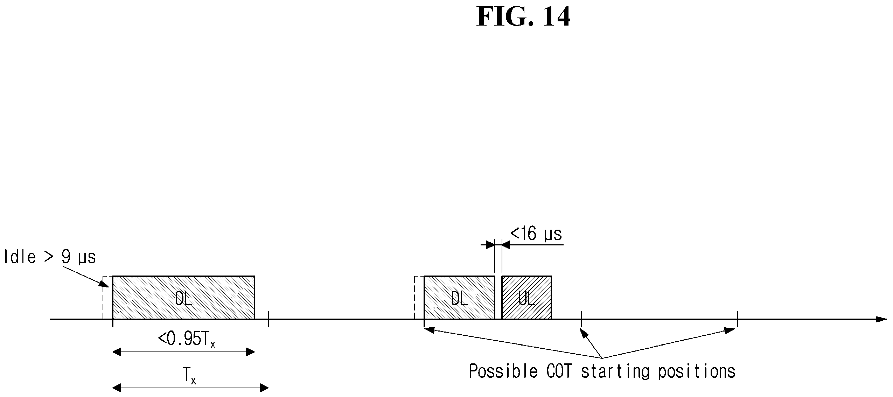

As still another example, a case of performing channel access based on a FBE method may be considered. The FBE method may be a channel occupancy method applicable to a region (e.g., specific building, factory) in which absence of other systems is ensured through a rule. Here, in the case of performing channel access based on the FBE method, transmission may start at a specific point in time. As a detailed example, FIG. 14 illustrates a semi-static channel access procedure applicable to the present disclosure. Referring to FIG. 14, a single COT may start every Tx ms. Here, when the channel is idle for at least 9 us before the COT, the channel may be occupied. Here, Tx ms may be set to one of 1 ms to 10 ms values. Also, the gap may be at least 5% of Tx. Here, COT sharing may be used in a similar manner as the LBE and the gap may be 16 us at most.

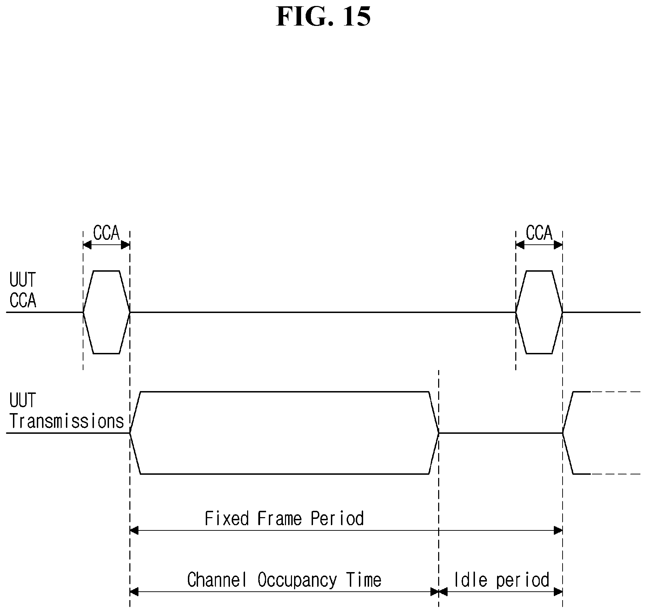

For example, FIG. 15 illustrates a method of performing channel occupancy applicable to the present disclosure. Referring to FIG. 15, a device may perform CCA check in a CCA observation period not smaller than 20 us based on energy detection, before performing transmission in an operating channel. Also, for example, in the case of transmitting a control frame (e.g., ACK, block ACK) in consideration of multicast, a CCA procedure may be skipped and transmission may be performed immediately after receiving a packet. That is, the UE may perform control frame transmission without a new CCA procedure, but this may not exceed the maximum COT.

For example, when the device transmits an ACK/NACK signal after receiving data, the device may skip the CCA, but this needs to be within the maximum COT. Also, for example, transmission of a signal with a maximum duty cycle within 5% of 50 ms as an observation period through short control signaling may be performed without CCA, but may not be limited to a specific form.

Also, for example, an LBT category may be considered. The LBT category may consider category 1 that performs transmission immediately after a short switching gap, category 2 that performs LBT without random backoff, category 3 in which a contention window of a fixed size and random backoff are performed, and category 4 in which a contention window of a variable size and random backoff are performed.

In detail, category 1 may be a method of performing transmission immediately after a short switching gap. Here, category 1 may be used to perform transmission immediately after a switching gap within one COT. The switching gap from receive to transmit within one COT may include a switching time of a transceiver, and may not be longer than 16 us. Also, for example, category 2 may be an operation of performing LBT without random backoff. For example, in the case of performing LBT, category 2 may be a method of performing initial CCA and, if the channel is idle, occupying the channel and transmitting data in an unlicensed channel. Here, random backoff count may not be performed. On the other hand, category 3 may be an LBT method in which random backoff is performed with the contention window of the fixed size. As a case in which LBT is performed based on category 3, if the channel is idle by performing initial CCA, random backoff may be performed with the fixed contention window (e.g., fixed "q" value in which q denotes a value that determines a contention window size of selecting a random N counter between 0 and q). For example, a random backoff operation allows a counter value randomly selected within the contention window to occupy the channel when the value is 0 by decreasing the count depending on whether the channel is idle for each ECCA slot.

As still another example, category 4 may be an LBT method in which random backoff is performed with the contention window of the variable size. Category 4 may differ from category 3 in that category 4 has a variable contention window. On the other hand, an operation of occupying the channel by applying an N value based on a random backoff value may be the same. That is, category 4 may be the same as category 3 except that the contention window size may differ based on a time or an event compared to category 3, and may be used in a plurality of wireless communication systems (e.g., LAA, NR-U, WiFi), but is not limited to a specific embodiment. Here, for example, different channel access categories (e.g., LBT category) may be defined and used for transmission of other channels/signals within one COT. Also, for example, in a new wireless communication system (e.g., NR-U), category 4 LBT and category 2 may be used within the COT, which may be as shown in Table 16 below. Also, category 2 LBT may be used for discovery burst transmission in a case in which there is no unicast transmission and a feature of the transmission is a limited transmission with transmission in a time of 1 ms or less and of which duty cycle is 5% or less, but may not be limited to a specific form.

[Table 16]

| Channel access LBT mechanisms defined for NR-U along with their designation:<br>- Cat 4 LBT with a contention window (Type 1)<br>- Cat 2 LBT with 25 $\mu$s gap (Type 2A)<br>- Cat 2 LBT with 16 $\mu$s gap (Type 2B)<br>- Cat 1 LBT with no more than 16 $\mu$s gap without channel sensing (Type 2C)<br>$\square$ A transmission burst length limit of 0.584 ms is applied when using this. |
| --- |

In the following, a method of assigning frequency resources such that sidelink communication of a wireless communication system (e.g., NR) may be operable in an unlicensed frequency band is described. For example, currently, a size of an RB set included in 20 MHz in the unlicensed band (e.g., NR-U) of the wireless communication system may be different based on an SCS. For example, for 15 kHz SCS, the size of the RB set may be 100 to 110 PRBs. Also, for 30 kHz SCS, the size of the RB set may be 50 to 55 PRBs. Here, for example, in the case of assigning interlace-based RB resources, some interlaces may include 11 PRBs, but remaining interlaces may include only 10 PRBs.

Here, for example, a case of varying a size of a subchannel to use the entire bandwidth in sidelink may be considered. That is, a case of differently setting the number of PRBs included in each subchannel may be considered. However, in a case in which different subchannel sizes are set, it may be difficult to guarantee transmission if retransmission is performed after initial transmission of a TB with the same transport block size (TBS). Considering the above, the subchannel size (i.e., number of PRBs) in each subchannel may be set to be the same, but may not be limited thereto. However, if the subchannel size is set to be the same in each subchannel, some may not be used in a single interlace based on interlace-based RB resource configuration.

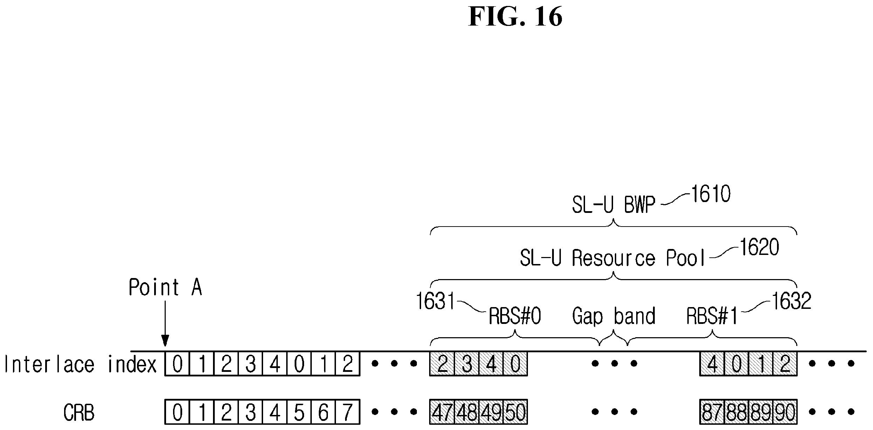

Here, for example, FIG. 16 illustrates a method of setting an RBS in a BWP and resource pool in a sidelink unlicensed band to which the present disclosure may apply. A frequency domain resource structure of a wireless communication system (e.g., NR SL-U) of the sidelink unlicensed band may consider a bandwidth part (BWP), a resource pool (RP), an interlaced RB, and an RBS (RB set). Here, the RBS may be considered even in the wireless communication system (e.g., NR U) of the unlicensed band, and it is not limited to a specific embodiment.

Referring to FIG. 16, a single sidelink unlicensed band (SL-U) BWP 1610 may be configured in a sidelink UE, a single SL-U RP 1620 may be configured in the SL-U BWP 1610, and two RBSs 1631 and 1632 may be configured in the SL-U RP 1620. However, it is only an example for clarity of description and is not limited to the aforementioned embodiment. Here, for example, in an SL-U system, an interlace structure may be considered to meet OCB and PSD requirements required in the unlicensed band. That is, in the SL-U system, the sidelink interlace structure may be performed by performing CRB indexing based on point A that is a reference frequency point of a single carrier. In FIG. 16, a frequency domain corresponding to CBR index 47 to CRB index 90 may be configured as the SL-U BWP 1610 based on configuration of the SL-U BWP 1610 and frequency resources including two RBSs RBS 1631 and 1632 may be configured based on configuration of the SL-U RP 1620, but it is only an example and may not be limited thereto. In the following, a frequency domain resource configuration method for the SL-U system as shown in FIG.16 and a resource assignment method for actual SL-U data transmission based thereon are described.

For example, in a channel access procedure of a sidelink unlicensed band wireless communication system (e.g., NR SL-U), the aforementioned type 1 channel access procedure and type 2 channel access procedure may be applied. Also, for example, UE-to-UE COT sharing may be applied to UEs that operate in the sidelink unlicensed band. That is, a single Tx UE may share a portion of unlicensed resources acquired through the LBT procedure with an Rx UE or another UE.

For example, as in the existing sidelink wireless communication system (NR SL), frequency resources may be configured based on a subchannel in the wireless communication system (e.g., NR SL-U) of the sidelink unlicensed band.

That is, the term "subchannel" may be used even in NR SL-U as in NR SL. However, the name of the subchannel may be differently configured in the wireless communication system (e.g., NR SL-U) of the sidelink unlicensed band and is not limited to a specific embodiment. The following description is made based on the subchannel for clarity of description.

For example, a single interlace-based RB structure to meet the aforementioned unlicensed band requirements may be defined as M RBs in the frequency domain. Here, the interlace-based RB structure may be defined as RBs with an interval corresponding to the uniform number of RBs. As still another example, the interlace-based RB structure may be configured using RBs with an interval corresponding the ununiform number of RBs and is not limited to a specific embodiment.

Here, the interlace-based RB structure may be preconfigured commonly for NR SL UEs in a cell-specific or carrier-specific manner according to configuration based on a bandwidth/numerology. As still another example, the interlace-based RB structure may be configured specifically in a physical link between UEs by higher layer configuration, and is not limited to a specific embodiment. Here, the interlace-based RB structure may be applied to all interlaces regardless of the carrier bandwidth. Therefore, the interlace-based RB structure may be configured according to a CRB that is defined based on point A that is a specific reference point in the frequency domain. Here, a single subchannel may be defined to be preconfigured with k interlaces. As still another example, a single subchannel may be configured with k interlaces through higher layer signaling. k may be the number of interlaces per subchannel. The number of interlaces per subchannel may have a fraction (or decimal value) or an integer value, which is described below. Also, for example, when a plurality of RBSs are configured within a single SL BWP, frequency resource assignment indication may include RBS assignment information and subchannel or interlace-based RB frequency resource assignment information.

As still another example, resource assignment may be performed based on an interlace-based RB unit rather than a "subchannel" unit in the sidelink unlicensed band system (e.g., NR SL-U). Here, the frequency resource assignment unit may be an interlace-based RB unit rather than the existing subchannel, but this is only an example and is not limited to a specific embodiment.

In the following, both the subchannel unit and interlace-based RB unit may be considered as resource allocation units in the frequency domain. Here, the subchannel may be configured with k interlaces or may be configured with the number of consecutive RBs. However, in the following, for clarity of description, the "subchannel unit" based on the interlace structure is described as the unit of frequency resource assignment. However, it is also possible to configure frequency resource assignment with the interlace-based RB unit rather than the subchannel unit by applying the proposed method, and is not limited to a specific form.

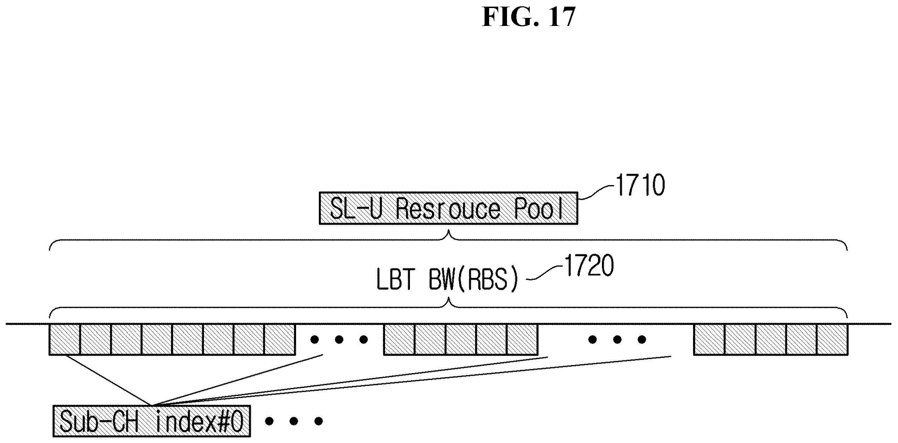

Here, for example, FIG. 17 illustrates a method of configuring a sidelink unlicensed band resource pool based on consecutive frequency resources to which the present disclosure applies. Referring to FIG. 17, a sidelink unlicensed band resource pool 1710 may be configured based on consecutive frequency resources. Here, the sidelink unlicensed band resource pool 1710 may be indicated only with an RBS index. In more detail, referring to FIG. 17, a case in which only a single RBS 1720 is configured in the sidelink unlicensed band resource pool 1710 in consideration of an LBT procedure in the unlicensed band. Here, resource pool configuration of the sidelink unlicensed band may be indicated to a UE based on consecutive frequency resources (hereinafter, Case 1). For example, to satisfy requirements such as the aforementioned OCB and PSD in the unlicensed band, most frequency resources (e.g., >80%) within at least one LBT BW (RBS 1720) may be configured to a single resource pool. Considering the aforementioned regulations, there may be a limit in configuring at least one resource pool for a single RBS within a single SL BWP. That is, only a single resource pool may be configured to be present within a single RBS and to include most frequency resources. Through this, the aforementioned regulation may be satisfied. Here, for example, sidelink transmission may be performed by selecting resources used for actual transmission through interlace-based resource frequency assignment from the resource pool configured based on consecutive frequency resources.

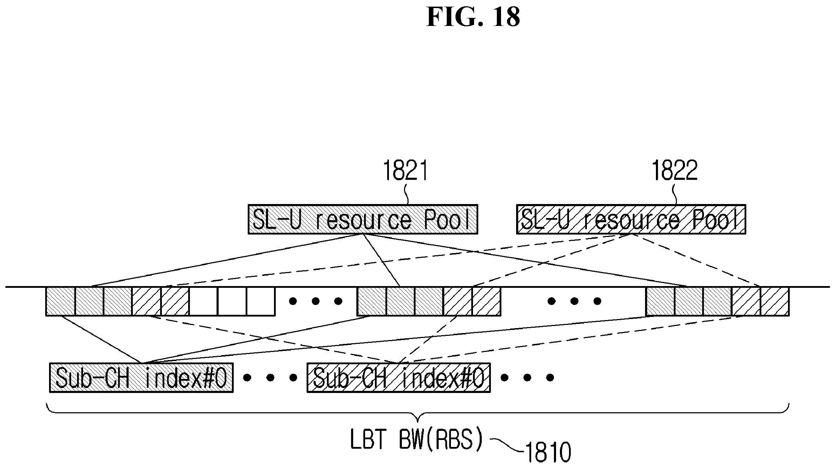

On the other hand, FIG. 18 illustrates frequency resource-based sidelink unlicensed band resource pool configuration using interlace assignment to which the present disclosure applies. Referring to FIG. 18, to satisfy regulations for frequency use in the unlicensed band, a resource pool may be configured using a new interlace RB or an interlace RB-based subchannel from an initial resource pool configuration stage. That is, the interlace RB or the interlace RB-based subchannel may be used from the resource pool configuration. For example, referring to FIG. 18, in the case of configuring a frequency resource-based sidelink unlicensed band resource pool using interlace assignment, frequency resources for resource pool configuration may be indicated based on combination of RBS and interlace/subchannel index (hereinafter, Case 2).

That is, in FIG. 18, to satisfy requirements such as the aforementioned OCB and PSD, a resource pool 1821, 1822 may be configured using the interlace RB or the interlace RB-based subchannel from the initial resource pool configuration stage. Therefore, the resource pool 1821, 1822 of the sidelink unlicensed band may not have a consecutive subchannel or PRB structure. That is, since the resource pool 1821, 1822 of the sidelink unlicensed band may be configured in a nonconsecutive PRB based on interlace assignment, requirements such as the aforementioned OCB and PSD may be satisfied. Also, unlike Case 1 (FIG. 17), a plurality of resource pools of the sidelink unlicensed band may be configured even within a single RBS, so flexibility of resource configuration may be provided.

Here, all of resource pool configuration methods corresponding to the aforementioned Case 1 and Case 2 may consider an interlace-based frequency resource assignment method. However, in an operation of configuring a single resource pool, there may be a difference as to whether to configure frequency resources as consecutive frequency resources similar to the existing NR SL (Case 1) or whether to configure a discontinuous resource pool in consideration of an interlace structure from a resource pool configuration stage (Case 2). In the following, an RBS-based sidelink unlicensed band resource pool configuration method is described based on the above.

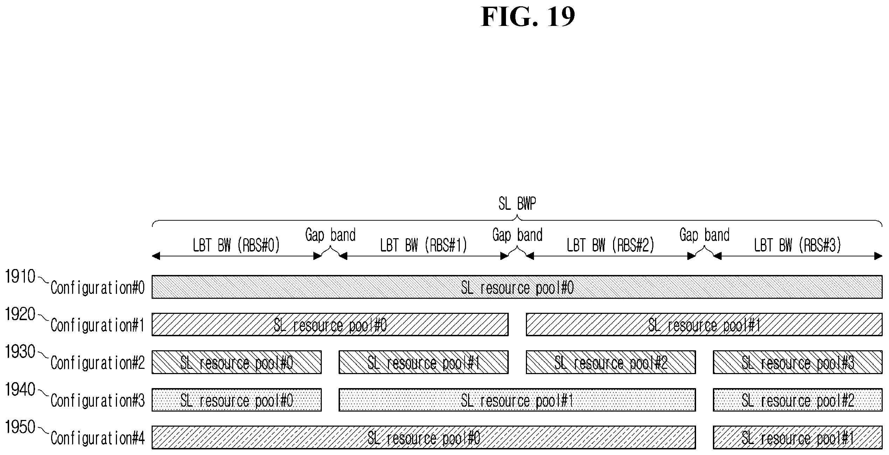

FIG. 19 illustrates a sidelink unlicensed band resource pool configuration method applicable to the present disclosure.

A sidelink unlicensed band resource pool may be configured based on an RBS. For example, a sidelink resource pool may be configured through a resource pool start point and the number of subchannels within a resource pool based on consecutive subchannels. For example, as described above, for the sidelink unlicensed band pool, a resource pool corresponding to an LBT BW may be configured through the resource pool start point and the number of subchannels within the resource pool based on consecutive subchannels. However, to efficiently configure the sidelink unlicensed band resource pool, RBS configuration and index may be considered. That is, the sidelink unlicensed band resource pool may configure a single resource pool by indicating the RBS configuration/index through resource pool configuration signaling.

In detail, for example, a single resource pool may be configured with one or more RBSs. Therefore, a specific resource pool may perform frequency configuration of the resource pool by providing consecutive RBS index configuration associated with the specific resource pool. Here, in the case of performing frequency configuration of the resource pool based on consecutive RBS index configuration, the resource pool may utilize gap band resources between RBSs, thereby maximizing frequency resource efficiency. A case in which four RBSs are configured within a sidelink BWP may be considered. Here, since a gap band between the respective RBSs may be configured, three gap bands may be configured and provided. Here, the resource pool of the sidelink unlicensed band may be configured through consecutive RBS indexes based on LBT BW. In detail, frequency domain resource configuration in one resource pool configuration may be provided through RBS index information. For example, frequency domain resource configuration in one resource pool configuration may be provided through information on start RBS index and the number of consecutive RBSs.

Referring to FIG. 19, in configuration 0 1910, a resource pool may be configured with four consecutive RBSs from RBS#0 to RBS#3. Here, the configuration 0 1910 may indicate resource pool configuration by indicating the start RBS index, RBS#0, and the number of consecutive RBSs, 4. As another example, in configuration 1 1920, as two consecutive RBSs, RBS#0 and RBS#1 may be configured to sidelink resource pool#0, and RBS#2 and RBS#3 may be configured to sidelink resource pool#1. Here, the configuration 1 may indicate resource pool configuration by indicating start RBS indexes, RBS#0 and RBS#2, and the number of consecutive RBSs, 2, for each resource pool. As another example, in configuration 2 1930, sidelink resource pool#0 may be configured to RBS#0, sidelink resource pool#1 may be configured to RBS#1, sidelink resource pool#2 may be configured to RBS#2, and sidelink resource pool#3 may be configured to RBS#3. Here, since each resource pool corresponds to each RBS, the corresponding RBS index and the number of RBSs, 1, may be indicated. As another example, configuration 3 1940, sidelink resource pool#0 may be configured to RBS#0, sidelink resource pool#1 may be configured to RBS#1 and RBS#2, and sidelink resource pool#2 may be configured to RBS#3. Here, the start RBS index and the number of RBSs corresponding to each sidelink resource pool may be indicated. Through this, configuration for each resource pool may be indicated. As another example, in configuration 4 1950, sidelink resource pool#0 may be configured to RBS#0, RBS#1, and RBS#2, and sidelink resource pool#1 may be configured to RBS#3. Here, the start RBS index and the number of RBSs corresponding to each sidelink resource pool may be indicated and, through this, configuration for each resource pool may be indicated. However, the resource pool configuration of FIG. 19 is only an example and may not be limited to the aforementioned embodiment.

Here, for example, when a plurality of RBSs are configured within SL BWP, frequency resource information for resource pool configuration of the sidelink unlicensed band may be indicated to the UE through at least one of interlace/subchannel-based configuration information and RBS configuration information.

Here, when all of interlace/subchannel-based configuration information and RBS configuration information are provided, frequency resource configuration information for a single resource pool may be provided to the UE through cross-frequency resource information. Also, when an intra-cell guard band (GB) present between consecutive RBSs are configured within a single resource pool, frequency resources corresponding to the GB may be used for sidelink unlicensed band communication as a part of the resource pool.

In the following, a method of assigning frequency resources for sidelink unlicensed band data transmission and reception in the frequency domain is described based on the above. The following description may be all applicable to the method of configuring the resource pool based on at least one of the interlace/subchannel-based configuration information and the RBS configuration information and is not limited to a specific embodiment.

Also, for example, the following description may be applied to all of a case in which consecutive frequency resources are configured to a single resource pool (Case 1) and a case in which a resource pool is configured based on inconsecutive frequency resources (Case 2). Here, although description is made for clarity of description based on the case in which a single resource pool is configured based on consecutive frequency resources (Case 1), the description may also be interchangeably applied to the case in which the resource pool is configured based on inconsecutive frequency resources (Case 2) and may not be limited to a specific form.

For example, frequency resource configuration of the sidelink unlicensed band may be performed according to start subchannel information and the number of consecutive subchannels based on consecutive frequency resources. Also, for time resource configuration of the sidelink unlicensed band, a resource pool may be configured by applying a bitmap among remaining slots based on an SSB transmission slot, a reserved slot, and TDD UL-DL configuration, and may not be limited to a specific embodiment.

However, the following description is made based on frequency resource configuration of the sidelink unlicensed band. For example, indication (i.e., bit size) for sidelink resource block set (SL RBS) index may be configured in consideration of the total number of SL RBSs included in a single SL BWP. Here, indication for the SL RBS index may indicate one or a plurality of SL RBS indexes. For example, SL RBSs may be consecutively configured in the frequency domain at all times, but may not be limited thereto. However, for clarity of description, the following description is made based on SL RBSs that are consecutively configured in the frequency domain.

Also, for example, frequency resource reservation may be indicated through a physical sidelink control channel (PSCCH). Here, frequency resource reservation indication may be performed in a second slot or second/third slot based on PSCCH received within the lowest interlace index among interlace indexes defined within a single carrier bandwidth. As described above, the interlace structure may be set to 10 interlaces (i.e., M=10) in 15 kHz SCS and may be set to 5 interlaces (i.e., M=5) in 30 kHz SCS based on LBT BW considered in the unlicensed band. In detail, the interlace structure may be configured as described above by considering that the number of RBs to configure a single RBS based on the LBT BW is 100 to 110 RBs in 15 kHz SCS and 50 to 55 RBs in 30 kHz SCS.

That is, in the case of 15 kHz SCS, some resources (i.e., RB) of the same interlace may be present in every 10 RBs. However, an interlace value may be configured with a different value based on at least one of a different RBS size (LBT BW), SCS, and the number of RBs that constitute a single interlace, and may not be limited to a specific embodiment.

**<Issue 1. Proposal for TBS determination method for PSSCH within NR SL-U system>**

In the existing wireless communication system (e.g., R16 NR SL system), a UE operation is defined as to which TBS value is to be determined within an indicated TBS table in consideration of the TBS table (normal table, URLLC purpose table) configured for PSSCH assigned by SCI.

On the other hand, unlike the existing SL system, in the NR SL-U system, there are many standard technologies newly designed in consideration of various regulations required in the unlicensed channel and channel environments and characteristics in the unlicensed band. For NR SL operation in the unlicensed band, a new physical channel structure is expected to be considered, such as various slot structures, channel transmission method, new resource assignment method, LBT application, mini slot structure, and dynamic PSFCH resource structure. Therefore, there is a need to introduce a new method for rate matching for PSSCH transmission. The present invention proposes a method of determining a TBS for PSSCH transmission in consideration of a new NR SL-U system.

The UE initially needs to determine the number of REs assigned for PSSCH transmission within a single slot. Here, the UE initially needs to determine the number of REs ($N'_{RE}$) assigned for PSSCH transmission within a single slot, which may be as shown in Equation 6 below.

[Equation 6]

$$N'_{RE} = N_{SC}^{RB}\left(N_{symb}^{sh} - N_{symb}^{PSFCH}\right) - N_{oh}^{PRB} - N_{RE}^{DMRS}$$

For example, in Equation 6, $N_{SC}^{RB}$ may be 12, and $N_{symb}^{sh}$ may be sl-LengthSymbols -2 : sl-LengthSymbols higher layer parameter. Also, $N_{symb}^{PSFCH}$ may be 3 if a 'PSFCH overhead indication' field of SCI format 1-A indicates "1, " and otherwise, may be 0. (For sl-PSFCH-Period = 2 or 4), if sl-PSFCH-Period = 0, $N_{symb}^{PSFCH} = 0$. If sl-PSFCH-Period = 1, $N_{symb}^{PSFCH} = 3$.

Also, for example, $N_{oh}^{PRB}$ may be overhead given by higher layer parameter "sl-X-Overhead." Also, $N_{RE}^{DMRS}$ may be as shown in Table 17 below determined by higher layer parameter "sl-PSSCH-DMRS-TimePattern."

[Table 17]

| sl-PSSCH-DMRS-TimePatternList | $N_{RE}^{DMRS}$ |
|---|---|
| {2} | 12 |
| {3} | 18 |
| {4} | 24 |
| {2,3} | 15 |
| {2,4} | 18 |
| {3,4} | 21 |
| {2,3,4} | 18 |

The UE may determine the total number of REs assigned for PSSCH, which may be as shown in Equation 7 below.

[Equation 7]

$$N_{RE} = N'_{RE} \cdot n_{PRB} - N_{RE}^{SCI,1} - N_{RE}^{SCI,2}$$

Here, $n_{PRB}$ denotes the total number of PRBs allocated for PSSCH, $N_{RE}^{SCI,1}$ denotes the total number of REs occupied by PSCCH and PSCCH DMRS, and $N_{RE}^{SCI,2}$ denotes the number of coded modulation symbols generated for 2nd SCI transmission with the assumption of $\gamma=0$, for example, the number of symbols before duplication in the case of 2 layer transmission, but is not limited thereto.

Based on the total number of REs for PSSCH determined above, the UE determines TBS by performing steps 2), 3), and 4) shown in Table 18.

[Table 18]

2) Unquantized intermediate variable ($N_{info}$) is obtained by $N_{inf\,o} = N_{RE} \cdot R \cdot Q_m \cdot \upsilon$.

If $N_{inf\,o} \leq 3824$

    Use step 3 as the next step of the TBS determination

else

    Use step 4 as the next step of the TBS determination

end if

3) When $N_{inf\,o} \leq 3824$, TBS is determined as follows

- quantized intermediate number of information bits $N'_{inf\,o} = \max\left(24, 2^n \cdot \left\lfloor \dfrac{N_{inf\,o}}{2^n} \right\rfloor\right)$, where

$n = \max\left(3, \lfloor \log_2\left(N_{inf\,o}\right)\rfloor - 6\right)$.

- use Table 5.1.3.2-1 find the closest TBS that is not less than $N'_{inf\,o}$.

Table 5.1.3.2-1: TBS for $N_{inf\,o} \leq 3824$

| Index | TBS | Index | TBS | Index | TBS | Index | TBS |
|---|---|---|---|---|---|---|---|
| 1 | 24 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 | | |
| 5 | 56 | 35 | 408 | 65 | 1480 | | |
| 6 | 64 | 36 | 432 | 66 | 1544 | | |
| 7 | 72 | 37 | 456 | 67 | 1608 | | |
| 8 | 80 | 38 | 480 | 68 | 1672 | | |
| 9 | 88 | 39 | 504 | 69 | 1736 | | |
| 10 | 96 | 40 | 528 | 70 | 1800 | | |
| 11 | 104 | 41 | 552 | 71 | 1864 | | |
| 12 | 112 | 42 | 576 | 72 | 1928 | | |
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

4) When $N_{info} > 3824$, TBS is determined as follows.

- quantized intermediate number of information bits $N'_{info} = \max\left(3840, 2^n \times round\left(\frac{N_{info}-24}{2^n}\right)\right)$, where

$n = \lfloor \log_2(N_{info}-24)\rfloor - 5$ and ties in the round function are broken towards the next largest integer.

- if $R \le 1/4$

$$TBS = 8 \cdot C \cdot \left\lceil \frac{N'_{info}+24}{8 \cdot C} \right\rceil - 24, \text{ where } C = \left\lceil \frac{N'_{info}+24}{3816} \right\rceil$$

else

if $N'_{info} > 8424$

$$TBS = 8 \cdot C \cdot \left\lceil \frac{N'_{info}+24}{8 \cdot C} \right\rceil - 24, \text{ where } C = \left\lceil \frac{N'_{info}+24}{8424} \right\rceil$$

else

$$TBS = 8 \cdot \left\lceil \frac{N'_{info}+24}{8} \right\rceil - 24$$

end if

end if

else if Table 5.1.3.1-2 is used and $28 \le I_{MCS} \le 31$,

- the TBS is assumed to be as determined from the DCI transported in the latest PDCCH for the same transport block using $0 \le I_{MCS} \le 27$. If there is no PDCCH for the same transport block using $0 \le I_{MCS} \le 27$, and if the initial PDSCH for the same transport block is semi-persistently scheduled, the TBS shall be determined from the most recent semi-persistent scheduling assignment PDCCH.

else

- the TBS is assumed to be as determined from the DCI transported in the latest PDCCH for the same transport block using $0 \le I_{MCS} \le 28$. If there is no PDCCH for the same transport block using $0 \le I_{MCS} \le 28$, and if the initial PDSCH for the same transport block is semi-persistently scheduled, the TBS shall be determined from the most recent semi-persistent scheduling assignment PDCCH.

Basically, when determining TBS, a difference between a target coding rate indicated by MCS and an actual coding rate (TBS ratio compared to an actual amount of used resources) needs to be minimized. Also, whether overhead that may occur in each slot among a plurality of slots in which a single TB is transmitted is deterministic or nondeterministic is also considered in the present invention as an important factor in determining the TBS. From this perspective, it is necessary to design a new TBS determination method in consideration of an operation or technology that is newly considered by the NR SL-U. Specific handling methods are proposed as follows.

Reference to signaling proposed in the following may refer to 1st SCI or 2nd SCI, higher layer signaling may refer to signaling from a layer above PHY layer that includes MAC or RRC layer, and "pre-configured' may also be collectively referred to as higher layer configuration.

**Discussion on PSSCH TBS determination**

Basically, RANI does not consider a case in which the UE has different TBSs between initial transmission and retransmission (last RAN1#100 agreement).

In the case of Uu, gNB may recognize a PDCCH reception status of the UE at all times. Therefore, gNB may ensure that the TBS remains the same between initial transmission and retransmission. That is, the base station may adjust the UE to have the same TBS using TBS calculation equation or a method of reusing a previous TBS, such that the UE may determine the same TBS at all times.

On the other hand, in the case of SL, a Tx UE sometimes may not recognize information on a PSCCH decoding status of an RX UE. For example, in the case of blind HARQ retransmission and NACK-only feedback, it is difficult for the Tx UE to verify the accurate PSCCH reception status. Therefore, in this case, in the current standard, the UE determines the TBS only through the TBS calculation equation.

In the existing SL, MCS, PSFCH presence status, and SL RS (DMRS, PT-RS) may be variously modified between initial transmission and retransmission. Therefore, to determine the TBS, the number of reference REs needs to be determined. For example, all of a PSFCH overhead indicator, averaged DMRS over configured patterns, and a configured overhead per resource pool are considered to ensure that the same TBS is determined. On the other hand, it is necessary to ensure some degree of flexibility in Tx parameters.

A gamma value is usually a value considered such that 2nd SCI has PRB-level mapping granularity. That is, the actual 2nd SCI may not be an integer multiple of a PRB unit.

In some cases, it may be difficult for the Tx UE to adjust 2nd SCI RE mapping according to resource pool level configuration (e.g., PSFCH period which affects time domain DMRS pattern and correspondingly 2nd SCI RE mapping).

A DMRS pattern within the initial transmission and a DMRS pattern with the retransmission may differ considering different channel conditions and speeds. Also, since PT-RS is determined based on a DMRS pattern, it may be modified likewise. This aspect has the problem of causing different gamma values and accordingly, having different TBSs.

$\rightarrow$ When determining a PSSCH TBS, calculation is performed assuming the gamma value as 0.

**Design issue 1. Operation of determining PSSCH TBS in consideration of various Gap/AGC symbol presence status to determine the number of PSSCH transmission symbols**

In the conventional NR SL system, gap symbols for AGC and Tx-Rx switching are excluded from PSSCH transmission symbols at all times. This is because corresponding symbols are present in all PSSCH slots (in the case of non-PSFCH slots).

On the other hand, as illustrated in the figure above, in the NR SL-U system, transmission needs to be maintained at all times for a longer period of time than for a short gap time (e.g., 16 $\mu$s or 25 $\mu$s gap) to avoid an unlicensed channel being taken over by another transmission node during a COT duration after successful LBT. AGC/Gap symbols present in the existing SL slot structure are provided on a first OFDM symbol and a last OFDM symbol (if there is no PSFCH). Also, in a slot in which additional PSFCH resources are present, additional overhead occurs due to PSFCH transmission. The figure above shows a case in which transmission including at least SL RS related to PSCCH/2nd SCI/PSSCH is generally performed for each slot. In this case, since there is no SL transmission in a time corresponding to AGC(@OFDM Symbol#0)/Gap(@OFDM Symbol#13) symbol, occupied resources of the corresponding unlicensed channel may be taken away by the other transmission node. To prevent this, NR SL-U may apply CP extension (CEP) similar to the existing NR-U. That is, this is a method of further extending a CP length of a previous OFDM symbol and filling an empty time space within AGC or gap symbol with LS transmission. The left side of the figure above shows an example in which this operation is applied. For example, to maintain occupied resources in the last gap symbol (based on OFDM symbol No. 13, normal slot with normal CP), transmission may be performed in advance in a part of or entire time of the corresponding gap symbol by extending CP of a first OFDM symbol (OFDM#0, green symbol) of a following slot.

Other than this method, a method of performing SL transmission on the corresponding AGC or gap symbol is to use a PSSCH RM method. That is, to more efficiently use resources on corresponding symbols, it may be used as resources for PSSCH transmission. This method basically assumes transmission of sidelink channels/signals such as consecutive PSSCH/PSCCH/2nd SCI. That is, after successful LBT, the Tx UE may maintain transmission of sidelink channels/signals in consecutive slots during COT duration and may avoid performing an unnecessary LBT procedure. Therefore, there are advantages that the channel utilization efficiency of the entire unlicensed band improves and the positive impact may be provided to other RAT systems. Also, there may be some disadvantages that PSSCH RM operation becomes somewhat complicated. However, considering the performance improvement that may be achieved through additional regulation modification, the methods may be sufficiently considered.

That is, unlike the existing SL, whether AGC/Gap symbol is present is not stable in SL-U. Therefore, the TBS may be determined through various methods, such as a method that may indicate presence or absence of overhead or assuming presence of specific overhead.

As described above, the method of processing or utilizing AGC/Gap symbols causes a structural change in the existing PSSCH TBS determination method. Hereinafter, the present invention proposes specific methods as follows.

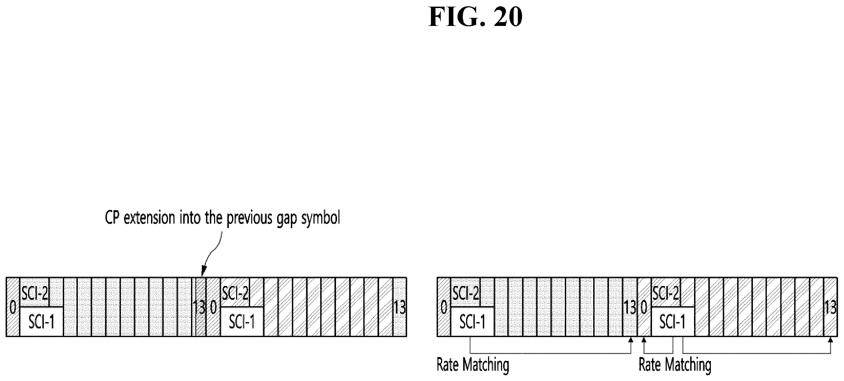

FIG. 20 may be a CPE and PSSCH RM operation for a sidelink unlicensed band applicable to the present disclosure.

**AGC/Gap symbol overhead handling method:**

The UE needs to determine the number of REs ($N'_{RE}$) assigned for PSSCH transmission within a single PRB. If interlace-based resource assignment is configured or determined for PSSCH transmission, the UE may determine the number of REs assigned for PSSCH transmission based on a single PRB within interlace, which may be as shown in Equation 8 below.

[Equation 8]

$$N'_{RE} = N^{RB}_{sc}\left(N^{sh}_{symb} - N^{PSFCH}_{symb}\right) - N^{PRB}_{oh} - N^{DMRS}_{RE}$$

For the method defined in the existing SL system, a new handling method for a new SL-U system is proposed as follows.

    ○ Method 1. On the other hand, if AGC/Gap symbols are used for PSSCH transmission through PSSCH rate matching (RM) without applying CPE, whether to use the corresponding AGC/Gap symbol may be semi-statically indicated/-determined by dynamic or higher layer configuration through SCI signaling (1st SCI or 2nd SCI), which differs from the existing method. The signaling is actually a value for an Rx UE rather than a Tx UE, and is assumed as a value already known as a value determined by the Tx UE from the perspective of the Tx UE. That is, AGC/Gap symbols excluded from PSSCH transmission symbols at all times in the existing PSSCH RM operation may be used as additional PSSCH transmission symbols depending on dynamic or higher layer configuration through the above SCI signaling (1st SCI or 2nd SCI) and may be applied to a PSSCH TBS determination method.

**Alt 1**

$$N^{sh}_{symb} = sl\text{-}LengthSymbols - N^{AGC\_Gap}_{symb}$$

**Alt 2**

$$N^{sh}_{symb} = sl\text{-}LengthSymbols - N^{AGC}_{symb} - N^{Gap}_{symb}$$

Here, $N^{AGC\_Gap}_{symb}$ refers to a value that reflects presence or absence of AGC and/or Gap symbol by the proposed signaling. If it is determined by a higher layer parameter of the UE or a UE scheduler, the number of PSSCH transmission symbols may be calculated by determining whether AGC/Gap is present within a single slot according to the determined value. For example, for a value of $N^{AGC\_Gap}_{symb}$, one of {0, 1, 2} may be selected and indicated. Of course, if additional configuration within a single slot (e.g., PSFCH transmission status) is considered, values of $N^{AGC\_Gap}_{symb}$ including values greater than 2 may also be applied.

Also, as shown in Alt 2) above, values ($N^{AGC}_{symb}$ and $N^{Gap}_{symb}$) for the number of symbols as to AGC and gap symbol presence status may be separately indicated, and may be separately independently determined to determine the number of symbols for the sidelink transmission. For example, depending on scheduling of the Tx UE, all of, one of, or none of AGC and/or gap (Tx-Rx switching) symbols may present in each slot. Therefore, depending on such scheduling method, SCI signaling for the information may be required.

As another example, in the case of indicating SL transmission resources based on configured grant, information related to AGC/Gap above may be provided based on higher layer parameters.

In the case of SCI signaling, a new field corresponding to 1 bit or 2 bits may be configured and defined within 1st SCI or 2nd SCI format.

sl-LengthSymbols: It is a higher layer parameter and the number of OFDM symbols used for SL transmission within a single slot.

    ○ **Method 2**

The Tx UE may determine a value of $N^{sh}_{symb}$ by newly defining a new sl_unlicensed-LengthSymbols value that reflects in advance an AGC/Gap symbol utilization status and/or non-slot-based PSSCH transmission to determine the PSSCH TBS. That is, the sl-LengthSymbols parameter that is a higher layer parameter may be replaced with new sl_unlicensed-LengthSymbols.

**Alt 3**

$$N^{sh}_{symb} = \text{sl\_unlicensed-LengthSymbols}$$

◦ **Method 3**

For one TB transmission, a parameter for "number of reference symbols $N^{AGC\_Gap}_{Ref\_symb}$" may be defined and applied to the PSSCH RM operation from the perspective of having a specific amount of overhead between initial transmission and subsequent retransmissions. The number of reference symbols $N^{AGC\_Gap}_{Ref\_symb}$ is not the number of AGC or gap symbols actually used, and is determined according to slot, SCI signaling, or higher layer configuration based on the overall average value or the largest value/smallest value. Through this, PSSCH RM is performed. As described above, the number of reference symbols that may be provided through SCI signaling described herein refers to signaling for the Rx UE, and the Tx UE determines values for the number of symbols by itself, so reception for the signaling is not required.

- Number of reference symbols $N^{AGC\_Gap}_{Ref\_symb}$ :

    ◦ per single COT
    x In this case, it may be regarded as a reference value that is determined based on the average overhead of AGC/Gap symbols of slots present within a single COT. That is, PSSCH transmission symbols for one TB transmission may be determined by considering overhead (number of symbols) of reference AGC/Gap symbols within the corresponding COT.
    ◦ per single resource pool, per single carrier/BWP, and/or per single RBS
    x In this case, it may be regarded as a reference value that is determined based on the average overhead of AGC/Gap symbols of slots present within a single resource pool, carrier/BWP, and/or RBS.

- The Tx UE may determine the number of independent reference symbols to perform PSSCH TBS determination, and may be configured by higher layer parameters. Of course, the Tx UE performs PSSCH RM and performs decoding based on the value that is indicated by the Tx UE through SCI signaling or configured through higher layer.

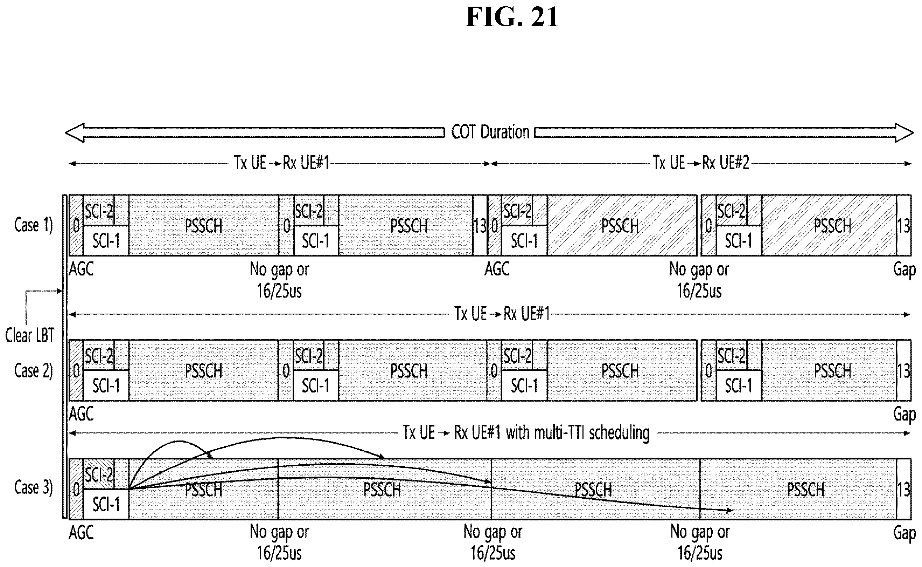

FIG. 21 illustrates PSSCH assignment and AGC/Gap presence status in various SL-U scheduling and channel occupancy cases applicable to the present disclosure.

## Case 1) Tx UE -> Rx UE#1 and Tx UE -> Rx UE#2

After succeeding in sidelink transmission (PSSCH/PSCCH/2nd SCI) for Tx UE->Rx UE#1 and the LBT procedure performed by the Tx UE, the Tx UE performs sidelink transmission to Rx UE#1 across two consecutive slots. Also, the Tx UE performs sidelink transmission to Rx UE#2 across two consecutive slots. There may be no gap symbol between two consecutive slots transmitted to the Rx UEs, respectively. In this case, when determining the TBS for PSSCH transmission, absence of the corresponding gap symbol may be considered by the proposed method.

## Case 2) Tx UE -> Rx UE#1 with single TTI scheduling

Similar to Case 1, the Tx UE may transmit four PSSCHs to a single Rx UE#1 across four consecutive slots after successful LBT. In this case, since presence or absence of AGC and/or gap symbols within each slot may be determined as illustrated, it is possible to apply the proposed method for determining the TBS in consideration of such characteristics.

**Case 3) Tx UE -> Rx UE#1 with multi TTI scheduling**

Unlike Case 2 above, the Tx UE may perform a plurality of TB transmissions to the Rx UE through one SCI signaling. In this case, as illustrated, after successful LBT, while AGC is performed only in a first slot for PSSCH, a gap symbol for Tx-Rx switching may be present only in a last PSSCH transmission slot. The PSSCH TBS may be determined through the proposed method that reflects this.

**PSSCH symbol determination method considering LBT results**

In addition to the PSSCH symbol determination method that considers the dynamic AGC/GAP symbol presence status, non-slot-based PSSCH/PSCCH transmission rather than slot-based PSSCH/PSCCH transmission may be considered. This is because, as illustrated in the figure below, whether LBT performed for channel occupancy in the unlicensed band is successful does not occur at the slot boundary at all times and may occur at any point in the middle. Therefore, PSSCH/PSCCH transmission may be performed from a random OFDM symbol index in the middle of the slot to make it possible to occupy a channel immediately after successful LBT.
In terms of determining the TBS, this transmission method is completely different from the existing PSCCH/PSSCH assignment, so needs to determine the TBS in consideration of this characteristic.

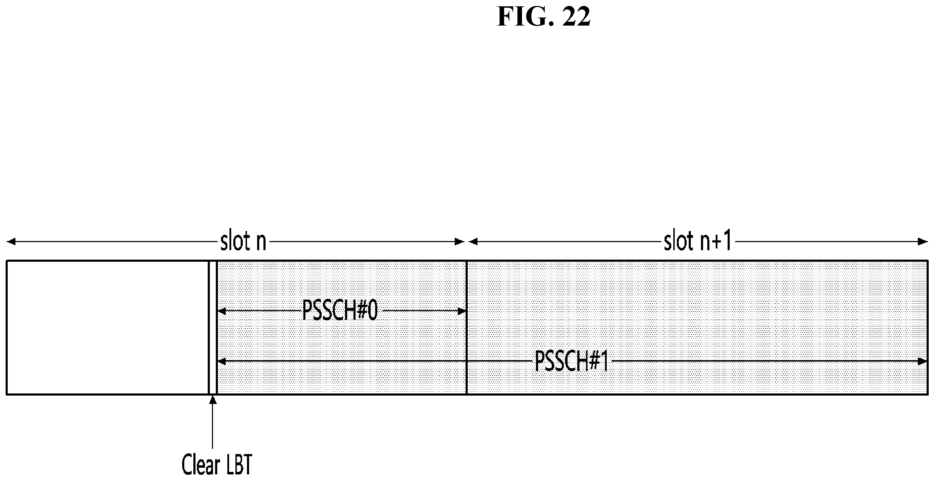

FIG. 22 illustrates a PSSCH applicable to the present disclosure.
If information on COT duration is considered in consideration of PSSCH transmission in addition to the PSSCH symbol determination method that considers the dynamic AGC/GAP symbol presences tatus, an additional PSSCH symbol determination method may be applied. The following equation is one of equations proposed in Issue 1. According to Issue 1, a different equation may be applied. It is described here only as an example. If a PSSCH transmission start that considers LBT results may consider an additional location without fixing only slot boundary at all times, methods proposed below may also be additionally considered. Here, proposed are methods that differently use sl-LengthSymbols value.

$$N_{symb}^{sh} = \text{sl-LengthSymbols} - N_{symb}^{AGC\_Gap}$$

**Method 1) The number of PSSCH transmission symbols for the same non-slot-based PSSCH as PSSCH#0 provided by SCI signaling is used. The sl-LengthSymbols value may be determined by SCI signaling.**

**Method 2) By SCI signaling, the average value of PSSCH transmission symbols for slot n and slot n+1, that is, non-slot and slot-based transmission is used for PSSCH transmission symbols. The value may also be configured by the Tx UE by SCI signaling to the Rx UE or by higher layer parameters for each resource pool.**

**Method 3) By SCI signaling, a largest value among PSSCH transmission symbols for slot n and slot n+1, that is, non-slot and slot-based transmission is used for PSSCH transmission symbols. The value may also be configured by the Tx UE by SCI signaling to the Rx UE or by higher layer parameters for each resource pool.**

**Design issue 2. PSSCH DMRS overhead status**

To minimize the need to perform an LBT procedure by the Tx UE, a method of scheduling transmission with a large data size and performing transmission at a time in consecutive slots during a period of time during which a channel is occupied when one LBT is successful may be considered. In the existing SL system, data transmission scheduling was possible in a plurality of slots for only one TB transmission through one SCI signaling. On the other hand, as illustrated, performing scheduling for a plurality of TB transmissions in a plurality of consecutive slots through one SCI signaling that considers opportunistic resource utilization probability in the unlicensed band may be considered.
That is, the Tx UE may consider a method of scheduling one or the plurality of TB transmissions in the plurality of slots through one SCI signaling to the same Rx UE(s) in the SL-U system. This resource assignment method may minimize LBT performance by the Tx UE and may open an opportunity capable of improving additional spectral efficiency.

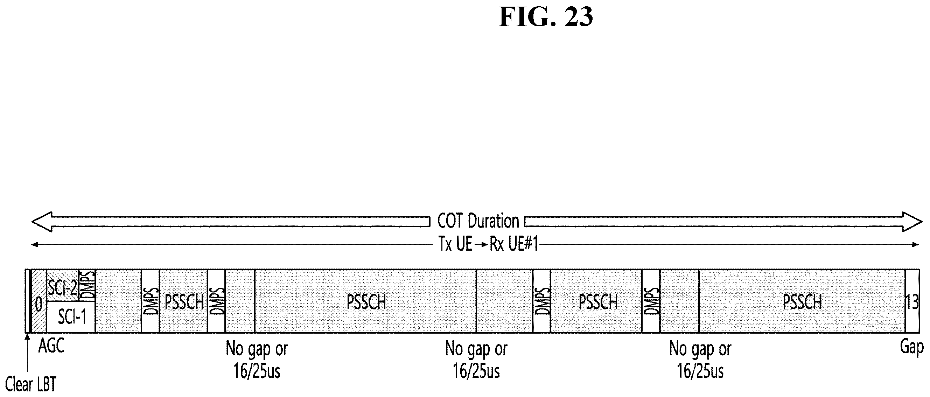

FIG. 23 illustrates PSSCH DMRS overhead control considering multi-TTI scheduling in SL-U applicable to the present disclosure.
When this resource assignment method is configured and scheduling is indicated, the Tx UE may open the opportunity to potentially remove existing overhead transmitted for each slot. From the perspective of PSSCH DMRS, when data TB transmission is performed across a plurality of slots to the same Rx UE(s), DMRS overhead may be reduced in some slots. In particular, when considering a scenario that utilizes the unlicensed band, the mobility of UEs that perform sidelink transmission and reception in the unlicensed band is limited.

The UE may determine the number of REs ($N'_{RE}$) assigned for PSSCH transmission within a single PRB, which may be as shown in Equation 9 below.

$$[\text{Equation 9}]$$

$$N'_{RE} = N_{sc}^{RB}\left(N_{symb}^{sh} - N_{symb}^{PSFCH}\right) - N_{oh}^{PRB} - N_{RE}^{DMRS}$$

For example, in Equation 9, $N_{SC}^{RB}$ may be 12, and $N_{symb}^{sh}$ may be sl-LengthSymbols -2 : sl-LengthSymbols higher layer parameter. Also, $N_{symb}^{PSFCH}$ may be 3 if a 'PSFCH overhead indication' field of SCI format 1-A indicates " 1," and otherwise, may be 0. (For sl-PSFCH-Period = 2 or 4), if sl-PSFCH-Period = 0, $N_{symb}^{PSFCH} = 0$. If sl-PSFCH-Period = 1, $N_{symb}^{PSFCH} = 3$.

Also, for example, $N_{oh}^{PRB}$ may be overhead given by higher layer parameter "sl-X- Overhead." Also, $N_{RE}^{DMRS}$ may be as shown in Table 19 below determined by higher layer parameter "sl-PSSCH-DMRS-TimePattern."

[Table 19]

| sl-PSSCH-DMRS-TimePatternList | $N_{RE}^{DMRS}$ |
|---|---|
| {2} | 12 |
| {3} | 18 |
| {4} | 24 |
| {2,3} | 15 |
| {2,4} | 18 |
| {3,4} | 21 |
| {2,3,4} | 18 |

The existing PSSCH DMRS RE is considered as overhead within a single PRB and omitted from the number of REs for PSSCH transmission resources. In fact, the existing SL system may also perform PSSCH scheduling for each slot and a different DMRS mapping pattern may be indicated for each slot by each SCI signaling. However, the DMRS mapping pattern is differently indicated according to the UE's mobility or channel environment and scheduling according thereto, so is a stable resource when determining the TBS.

## Method 1

An additional DMRS pattern is configured within higher layer parameter sl-PSSCH-DMRS-TimePattern that configures the DMRS stable. At least no DMRS pattern ($N_{RE}^{DMRS}$ =0) may be added to the parameter and configured within the above table.

## Method 2

A value of $N_{RE}^{DMRS}$ =0 may be determined using a DMRS pattern that is actually used based on an SCI field value that indicates a PSSCH DMRS pattern. That is, a different PSSCH DMRS and an actual DMRS overhead value may be applied to determine the TBS for each slot.

**Method 3**

$N_{RE}^{DMRS}$ that considers a reference DMRS pattern is determined based on a DMRS pattern indicated by 1st SCI signaling. That is, the reference DMRS pattern may be indicated through SCI signaling to determine the TBS rather than the DMRS pattern for actual PSSCH decoding. Therefore, the actual PSSCH DMRS mapping pattern and the DMRS mapping pattern considered to determine the TBS may differ. The DMRS assignment pattern considered for TBS determination is defined as a reference DMRS assignment pattern and utilized to determine the TBS.

**Design issue 3. PSCCH/PSCCH DMRS overhead status**

The UE finally determines the total number of REs assigned for PSSCH by considering the number of REs $N'_{RE}$ per RB, the number of scheduled RBs, and related SCI overhead, which may be as shown in Equation 10 below.

$$[\text{Equation 10}]$$

$$N_{RE} = N'_{RE} \cdot n_{PRB} - N_{RE}^{SCI,1} - N_{RE}^{SCI,2}$$

For example, $n_{PRB}$ denotes the total number of PRBs assigned for PSSCH, $N_{RE}^{SCI,1}$ denotes the total number of REs occupied by PSCCH and PSCCH DMRS, and $N_{RE}^{SCI,2}$ denotes the number of coded modulation symbols generated for 2nd SCI transmission with the assumption of $N_{RE}^{SCI,2} = \gamma = 0$, for example, the number of symbols before duplication in the case of 2 layer transmission.

Here, the total number of REs occupied by PSCCH and PSCCH DMRS is different from the existing case, and PSCCH may not be present in all SL slots. That is, depending on a configured scheduling method, it is difficult in SL-U to assume the same PSCCH overhead at all times for PSSCH transmission in a plurality of schedules that schedule the same TB. Using FIGS. 18 and 19 as examples, when multi-TTI scheduling is used, PSCCH transmission associated with one TB transmission may be performed in some of all PSSCH transmission slots or in only one slot. That is, PSCCH transmission that schedules a plurality of PSSCHs to be transmitted across a plurality of slots associated with one TB transmission may be performed in some of the plurality of slots or in only one slot. In this case, the improvement technique needs to be applied to the formula for determining the PSSCH TBS.

LBT success status (RBS unit success status) - Whether PSCCH is present may vary depending on whether LBT is successful for each configured RBS. Alternatively, if LBT is successful in at least one RBS, it relates to whether it is present only in one RBS or also present in another RBS.

When multi-TTI scheduling is configured or indicated,

● **Method 1**

PSCCH/PSCCH DMRS overhead $N_{RE}^{SCI,1}$ is determined using a value calculated as the average value in the scheduled PSSCH transmission slots.

● **Method 2**

PSCCH/PSCCH DMRS overhead $N_{RE}^{SCI,1}$ uses a PSCCH/PSCCH DMRS overhead value that is determined by higher layer parameters.

If LBT is additionally successful in one or more consecutive RBSs (as illustrated in the figure below), additional PSCCH overhead is calculated by considering whether PSCCH duplication is applied.

- In addition to the methods, PSCCH/PSCCH DMRS overhead $N_{RE}^{SCI,1}$ in the frequency domain increases by multiples of the number of PSCCH duplications. Therefore, it is reflected to calculate PSCCH/PSCCH DMRS overhead $N_{RE}^{SCI,\,1}$.

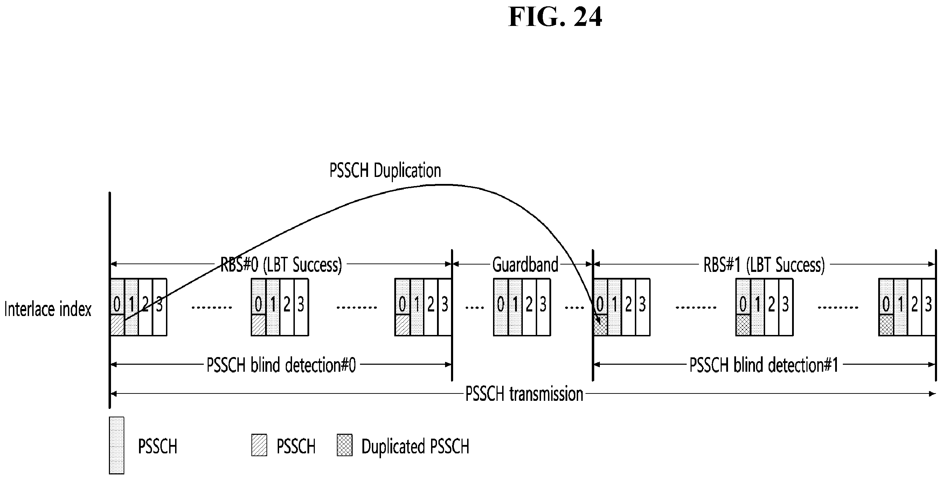

FIG. 24 illustrates PSCCH duplication assigned to an RBS and transmitted applicable to the present disclosure.

**Design issue 4. PSFCH overhead status**

The UE needs to determine the number of REs ($N'_{RE}$) assigned for PSSCH transmission within a single PRB, which may be as shown in Equation 11 below.

[Equation 11]

$$N'_{RE} = N_{sc}^{RB}\left(N_{symb}^{sh} - N_{symb}^{PSFCH}\right) - N_{oh}^{PRB} - N_{RE}^{DMRS}$$

For example, $N_{symb}^{PSFCH}$ may be 3 if a 'PSFCH overhead indication' field of SCI format 1-A indicates "1," and otherwise, may be 0. (For sl-PSFCH-Period = 2 or 4), if sl-PSFCH- Period = 0, $N_{symb}^{PSFCH} = 0$. If sl-PSFCH-Period = 1, $N_{symb}^{PSFCH} = 3$.

As another example, $N_{symb}^{PSFCH}$ may be 3.

Unlike the existing SL PSFCH transmission period configuration, if LBT is successful, PSFCH transmission and reception may be performed based on SCI triggering in SL-U. That is, rather than a method of considering PSFCH overhead through SCI indication in PSFCH resources periodically configured by higher layer, PSFCH transmission in a specific slot along with SCI triggering may be considered without PSFCH resource configuration by the higher layer or based on that PSFCH transmission resources may be configured in specific slots within COT.

In this case, unlike the existing method of accurately verifying PSFCH overhead by higher layer parameters and SCI signaling, various types of PSFCH transmission methods may be considered depending on LBT results and the proposed PSFCH resource configuration and SCI indication method.

If at least one PSFCH transmission per slot is performed in SL-U, it needs to be excluded from the number of REs assigned for PSSCH transmission by the increased number of PSFCH transmission symbols.

**Design issue 5. SL SSB presence status**

The existing SL does not consider SL-SSB transmission within a resource pool. On the other hand, if LBT is successful, SL-SSB transmission may also be possible in SL-U. Therefore, SL-SSB transmission needs to be considered with PSSCH transmission. Also, to satisfy OCB requirements, SL-SSB transmitted in 11 RBs needs to be multiplexed with PSSCH rather than being transmitted alone. In this manner, the corresponding requirements may be satisfied. For example, after successful LBT, SL-SSB and PSSCH may be multiplexed in the same slot using FDM or TDM. In this case, overhead for SL-SSB needs to be considered to determine the number of resources for PSSCH transmission.

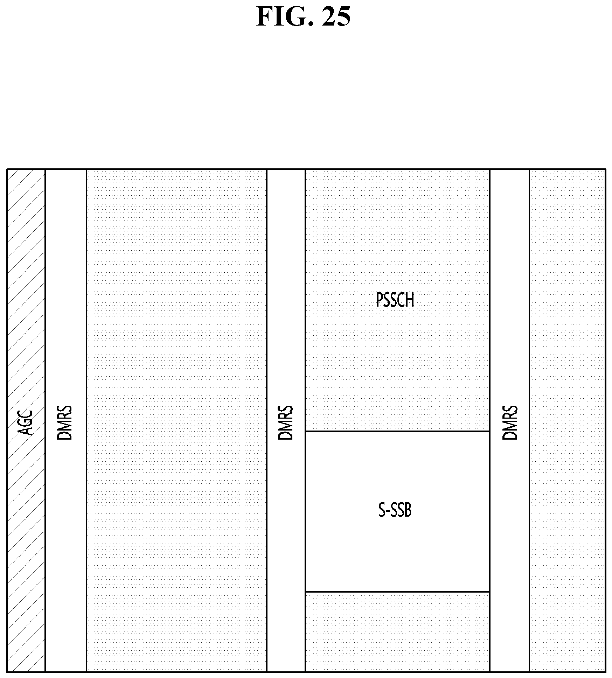

FIG. 25 illustrates an SL-SSB applicable to the present disclosure.

**Method 1**

The total number of REs assigned for PSSCH is determined as follows, by reflecting actual SL-SSB overhead.

The UE finally determines the total number of REs assigned for PSSCH in consideration of the number of REs $N'_{RE}$ per RB, the number of scheduled RBs, and related SL SSB overhead. As illustrated in the figure above, the TBS for PSSCH may be determined by excluding resources for S-SSB from among REs assigned for PSSCH, which may be as shown in Equation 12 below.

[Equation 12]

$$N_{RE} = N'_{RE} \cdot n_{PRB} - N_{RE}^{SCI,1} - N_{RE}^{SCI,2} - N_{RE}^{S-SSB}$$

A TBS value is calculated by excluding REs corresponding to SL-SSB from the total number of PSSCH REs.

**Method 2**

The UE needs to determine the number of REs ( $N'_{RE}$ ) assigned for PSSCH transmission within a single PRB.

**Alt 1**

$$N'_{RE} = N_{sc}^{RB} \left( N_{symb}^{sh} - N_{symb}^{PSFCH} \right) - N_{oh}^{PRB} - N_{RE}^{DMRS} - N_{symb}^{S-SSB}$$

**Alt 2**

$$N'_{RE} = N_{sc}^{RB} \left( N_{symb}^{sh} - N_{symb}^{PSFCH} - N_{Symb}^{S-SSB} \right) - N_{oh}^{PRB} - N_{RE}^{DMRS}$$

For example, when S-SSB is multiplexed with PSSCH resources as shown in FIG. 25, the TBS may be determined in consideration of S-SSB overhead.

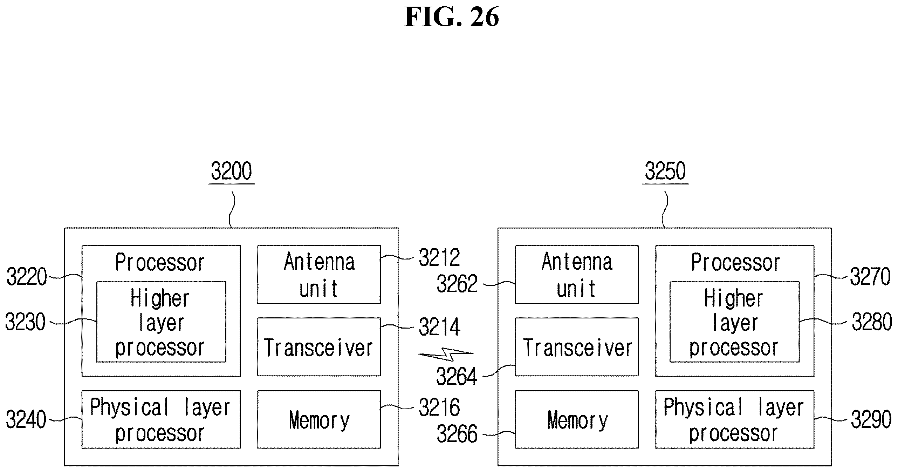

FIG. 26 is a diagram illustrating a base station apparatus and a UE apparatus to which the present disclosure may be applied.

The base station device 2600 may include a processor 2620, an antenna unit 2612, a transceiver 2614, and a memory 2616.

The processor 2620 performs a baseband-related signal processing and may include a higher layer processor 2630 and a physical layer processor 2640. The higher layer processor 2630 may process the operation of a medium access control (MAC) layer, a radio resource control (RRC) layer, or a higher layer thereof. The physical layer processor 2640 may process the operation of the physical (PHY) layer (e.g., uplink receive signal processing, downlink transmission signal processing). Also, to perform baseband-related signal processing, the processor 2620 may also control the operation of the base station device 2600 as a whole.

The antenna unit 2612 may include one or more physical antennas, and may support the multiple input multiple output (MIMO) transmission and reception in the case of including a plurality of antennas. Also, beamforming can be supported.

The memory 2616 may store computationally processed information of the processor 2620, software, operating systems, applications, and the like related to the operation of the base station device 2600, and may include components such as buffers.

The processor 2620 of the base station 2600 may be configured to implement the operation of the base station in the example described herein.

The UE device 2650 may include a processor 2670, an antenna unit 2662, a transceiver 2664, and a memory 2666. For example, herein, the UE device 2650 may perform communication with the base station device 2600. As another example, herein, the UE device 2650 may perform SL communication with another UE device. That is, the UE device 2650 used herein refers to a device capable of communicating with at least one of the base station device 2600 and the other UE devices and is not limited to communication with a specific device.

The processor 2670 performs baseband-related signal processing and may include a higher layer processor 2680 and a physical layer processor 2690. The higher layer processor 2680 may process the operation of the MAC layer, the RRC layer, or the higher layer. The physical layer processor 2690 may process the operations of the PHY layer (e.g., downlink receive signal processing, uplink transmission signal processing). Also, to perform baseband-related signal processing, the processor 2670 may also control the operation of the UE device 2650 as a whole.

The antenna unit 2662 may include one or more physical antennas, and may support MIMO transmission and reception in the case of including a plurality of antennas. Also, beamforming can be supported.

The memory 2666 may store computationally processed information of the processor 2670, software, operating systems, applications, and the like related to the operation of the UE device 2650, and may include components such as buffers.

The terminal device 2650 according to an example of the present disclosure may be associated with a vehicle. For example, the terminal device 2650 may be integrated in the vehicle, may be located in the vehicle, or may be located on the vehicle. Also, the terminal device 2650 according to the present disclosure may be the vehicle itself. Also, the terminal device 2650 according to the present disclosure may be at least one of a wearable terminal, AR/VR, an Internet of things (IoT) terminal, a robot terminal, and a public safety terminal. The terminal device 2650 to which the present disclosure may apply may include various types of communication devices that support an interactive service using sidelink, for services, for example, Internet access, service execution, navigation, real-time information, autonomous driving, and safety-and-risk diagnosis. Also, the terminal device 2650 may include an AR/VR device capable of performing a sidelink operation or any type of communication devices capable of performing a relay operation as a sensor.

Here, the vehicle to which the present disclosure applies may include an autonomous vehicle, a semi-autonomous vehicle, and a non-autonomous vehicle. Meanwhile, although the terminal device 2650 according to an example of the present disclosure is described in association with the vehicle, at least one of the UEs may not be associated with the vehicle. It is provided as an example only and should not be interpreted to limit application of the present disclosure.

Also, the terminal device 2650 according to an example of the present disclosure may include various types of communication devices capable of performing cooperation that supports an interactive service using sidelink. That is, the terminal device 2650 may directly support the interactive service using the sidelink and may be employed as a cooperation device for supporting the interactive service using the sidelink.

Also, various embodiments of the present disclosure may be implemented by hardware, firmware, software, or combination thereof. In the case of implementation by hardware, the embodiments may be implemented by one or more application specific integrated circuits (ASICs), digital signal processors (DSPs), digital signal processing devices (DSPDs), programmable logic devices (PLDs), field programmable gate arrays (FPGAs), general processors, controllers, microcontrollers, microprocessors, etc.

The scope of the present disclosure includes software or machine-executable instructions (e.g., OS, application, firmware, program, etc.) such that the operations according to the method of various embodiments may be executed on an apparatus or a computer, and a non-transitory computer-readable medium storing such software or instructions to be executable on the apparatus or the computer.

Various embodiments of the present disclosure are to explain the representative aspects of the present disclosure rather than listing all the possible combinations and matters described in the various embodiments may be applied alone or in combination of two or more embodiments.

INDUSTRIAL APPLICABILITY

The above may also be applied to other systems.

**Claims**

1. A method of performing sidelink communication in an unlicensed band, the method comprising:

    determining entire resource elements (REs) for a physical sidelink shared channel (PSSCH); and
    determining a transport block size (TBS) based on the entire REs.

# FIG. 1

| Downlink frame $i$ |
|---|

| Uplink frame $i$ |
|---|

$N_{TA}\,T_s$

# FIG. 2

One sub frame

$N_{sub\ frame}^{symbols\ \mu}$ OFDM symbols

$k = N_{RB}^{\mu}\ N_{sc}^{RB} - 1$

$N_{RB}^{\mu}\ N_{sc}^{RB}$ subcarriers

$N_{sc}^{RB}$ subcarriers

Resource block

Resource element
$-(k,\bar{l})$ in resource grid
$-(k,l)$ in resource block

$l = 0$

$\bar{l} = 14 \cdot 2^{\mu} - 1$

$k = 0$

# FIG. 3

**FIG. 4**

EP 4 572 189 A1

| C-V2X | |
|---|---|

| V2V | Reserved | Reserved | Tolling | Control | I2V | PVD/ Security |
|---|---|---|---|---|---|---|
| CH 1 | CH 2 | CH 3 | CH 4 | CH 5 | CH 6 | CH 7 |

5,855    5,865    5,875    5,885    5,895    5,905    5,915    5,925 MHz

# FIG. 5

SL BWP
Excluded RB
Reserved slot
Excluded slot
SSB slot

sl-TimeResource(length = $L_{bitmap}$)
(e.g.,0011111100)

sl-SubchannelSize

$10240 \times 2^{\mu}$

Time(slots)

Frequency(RBs)

sl-RB-Number

sl-StartRBsubchannel

**FIG. 6**

# FIG. 7

EP 4 572 189 A1

| U-NII-1<br>(100 MHz) | U-NII-2A<br>(100 MHz) | U-NII-2B<br>(120 MHz) | U-NII-2C<br>(255 MHz) | U-NII-3<br>(100 MHz)<br>Part 15.247 Rules<br>(125 MHz) | 25 MHz | U-NII-4<br>(75 MHz) |
|---|---|---|---|---|---|---|

5.150 GHz   5.250 GHz   5.350 GHz    5.470 GHz         5.725 GHz    5.850 GHz  5.925 GHz

# FIG. 8

EP 4 572 189 A1

# FIG. 9

911 — LBT bandwidth(RB set1,s1)

913 — Guardband

912 — LBT bandwidth(RB set0,s0)

Carrier bandwidth

nrofCRB(0..15), startCRB(0..274), $GB_{s0,x}^{start,\mu}$

$RB_{s1,uplink}^{end,\mu}$

$RB_{s,x}^{start,\mu} = N_{grid,x}^{start,\mu} + \begin{cases} 0 & s = 0 \\ GB_{s-1,x}^{start,\mu} + GB_{s-1,x}^{size,\mu} & otherwise \end{cases}$

$RB_{s,x}^{end,\mu} = N_{grid,x}^{start,\mu} + \begin{cases} N_{grid,x}^{size,\mu} & s = N_{RB-set,x} - 1 \\ GB_{s,x}^{start,\mu} & otherwise \end{cases}$

$RB_{s1,uplink}^{start,\mu}$

$RB_{s0,uplink}^{end,\mu}$

$RB_{s0,uplink}^{start,\mu}$

$N_{BWP,i}^{size,\mu} = RB_{s1,uplink}^{end,\mu} - RB_{s0,uplink}^{start,\mu} - 1$

$N_{BWP,i}^{start,\mu} = RB_{s0,uplink}^{start,\mu}$

922 — BWP-2

923 — BWP-3

921 — BWP-1

**FIG. 10**

# FIG. 11

```
                                        S1110
        ┌──────────────────────────┐
        │   Wait until idle for    │
        │   Td = 16 + m · 9μs      │
        └──────────────────────────┘
                      │             S1120
        ┌──────────────────────────┐
        │   Initialize backoff     │
        │   counter N ∈ {0,CW}     │
        └──────────────────────────┘
                      │
    ┌─────────────────┤             S1130
    │            ◇─────────────◇        Y
    │           ◇   N = 0?      ◇──────────► Transmit
    │            ◇─────────────◇
    │                  │ N          S1140
    │        ┌──────────────────────────┐
    │        │   Decrement counter N    │
    │        └──────────────────────────┘
    │                  │             S1150
    │   Y         ◇─────────────◇
    │◄───────────◇  Channel idle  ◇
    │             ◇  for 9μs?     ◇
    │              ◇─────────────◇
    │                  │ N          S1160
    │        ┌──────────────────────────┐
    │        │   Wait until idle for    │
    │        │   Td = 16 + m · 9μs      │
    │        └──────────────────────────┘
    │                  │
    └──────────────────┘
```

## FIG. 12

Type 2A, B or C depending on gap size          <25 µs(Type 2B or 2C)

| | DL data | UL data | DL data |

Type 1 ← → COT

# FIG. 13

OFDM symbol

Cyclic extension

Uplink

$C_2 T_{symb} - T_{TA} - 16 \; \mu s$

$T_{TA}$

Downlink

At device

Uplink

16 μs gap

Downlink

At gNB

EP 4 572 189 A1

# FIG. 14

Idle > 9 µs

DL

<0.95Tₓ

Tₓ

<16 µs

DL   UL

Possible COT starting positions

EP 4 572 189 A1

# FIG. 15

**FIG. 16**

**FIG. 17**

**FIG. 18**

1821

1822

SL-U resource Pool

SL-U resource Pool

Sub-CH index#0 • • • • Sub-CH index#0 • • • •

LBT BW(RBS) 1810

EP 4 572 189 A1

FIG. 19

# FIG. 20

EP 4 572 189 A1

CP extension into the previous gap symbol

Rate Matching          Rate Matching

# FIG. 21

# FIG. 22

# FIG. 23

COT Duration

Tx UE → Rx UE#1

| AGC | DMPS | | PSSCH | DMPS | | PSSCH | | DMPS | PSSCH | DMPS | | PSSCH | 13 |
|---|---|---|---|---|---|---|---|---|---|---|---|---|---|

SCI-2 / 0 / SCI-1

Clear LBT

No gap or 16/25us

No gap or 16/25us

No gap or 16/25us

Gap

**FIG. 24**

# FIG. 25

**FIG. 26**

3200

3250

EP 4 572 189 A1

## INTERNATIONAL SEARCH REPORT

| International application No. |
| --- |
| **PCT/KR2023/012024** |

**A.    CLASSIFICATION OF SUBJECT MATTER**

**H04L 1/00**(2006.01)i; **H04L 5/00**(2006.01)i; **H04W 72/20**(2023.01)i; **H04W 72/04**(2009.01)i; **H04W 4/40**(2018.01)i; **H04W 72/12**(2009.01)i

According to International Patent Classification (IPC) or to both national classification and IPC

**B.    FIELDS SEARCHED**

Minimum documentation searched (classification system followed by classification symbols)

H04L 1/00(2006.01); H04W 4/40(2018.01); H04W 72/04(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 비면허 대역(unlicensed band), 사이드링크 통신(sidelink communication), 물리 사이드링크 공유 채널(physical sidelink shared channel, PSSCH), 자원 요소(resource element, RE), 전송 블록 크기 (transport block size, TBS)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2021-226950 A1 (APPLE INC. et al.) 18 November 2021 (2021-11-18)<br>See paragraphs [0004]-[0007] and [0085]; claim 1; and figure 6. | 1 |
| A | KR 10-2022-0107199 A (LG ELECTRONICS INC.) 02 August 2022 (2022-08-02)<br>See claims 1-6. | 1 |
| A | KR 10-2021-0114063 A (LG ELECTRONICS INC.) 17 September 2021 (2021-09-17)<br>See claims 1-4. | 1 |
| A | WO 2022-036703 A1 (LENOVO (BEIJING) LIMITED) 24 February 2022 (2022-02-24)<br>See paragraphs [0001], [0035]-[0039] and [0100]-[0101]. | 1 |
| A | US 2021-0400704 A1 (QUALCOMM INCORPORATED) 23 December 2021 (2021-12-23)<br>See paragraphs [0008]-[0010]; and claim 1. | 1 |

☐ Further documents are listed in the continuation of Box C.        ☑ See patent family annex.

| | |
| --- | --- |
| *    Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **20 November 2023** | **20 November 2023** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 572 189 A1

## INTERNATIONAL SEARCH REPORT
### Information on patent family members

International application No.

**PCT/KR2023/012024**

| Patent document cited in search report | | | Publication date (day/month/year) | Patent family member(s) | | | Publication date (day/month/year) |
|---|---|---|---|---|---|---|---|
| WO | 2021-226950 | A1 | 18 November 2021 | BR | 112022022846 | A2 | 13 December 2022 |
| | | | | CN | 115516961 | A | 23 December 2022 |
| | | | | CO | 2022016640 | A2 | 16 February 2023 |
| | | | | EP | 4122262 | A1 | 25 January 2023 |
| | | | | JP | 2023-525546 | A | 16 June 2023 |
| | | | | KR | 10-2023-0008182 | A | 13 January 2023 |
| | | | | US | 2023-0057351 | A1 | 23 February 2023 |
| KR | 10-2022-0107199 | A | 02 August 2022 | US | 2023-0024430 | A1 | 26 January 2023 |
| | | | | WO | 2021-112575 | A1 | 10 June 2021 |
| KR | 10-2021-0114063 | A | 17 September 2021 | KR | 10-2397950 | B1 | 13 May 2022 |
| | | | | US | 2022-0201711 | A1 | 23 June 2022 |
| | | | | WO | 2020-204559 | A1 | 08 October 2020 |
| WO | 2022-036703 | A1 | 24 February 2022 | CN | 116368886 | A | 30 June 2023 |
| | | | | EP | 4201132 | A1 | 28 June 2023 |
| | | | | JP | 2023-538148 | A | 06 September 2023 |
| | | | | KR | 10-2023-0054366 | A | 24 April 2023 |
| | | | | US | 2023-0292345 | A1 | 14 September 2023 |
| US | 2021-0400704 | A1 | 23 December 2021 | CN | 115943587 | A | 07 April 2023 |
| | | | | EP | 4169190 | A1 | 26 April 2023 |
| | | | | WO | 2021-257255 | A1 | 23 December 2021 |

Form PCT/ISA/210 (patent family annex) (July 2022)